(19) Europäisches Patentamt
European Patent Office
Office européen des brevets

(11) **EP 4 765 030 A1**

(12) **EUROPEAN PATENT APPLICATION**
published in accordance with Art. 153(4) EPC

(43) Date of publication:
**24.06.2026 Bulletin 2026/26**

(21) Application number: **24887529.6**

(22) Date of filing: **13.08.2024**

(51) International Patent Classification (IPC):
***G06T 17/05*** (2011.01)  ***G06T 15/00*** (2011.01)

(52) Cooperative Patent Classification (CPC):
**G06T 17/05; G01C 21/00; G01C 21/3822;
G06T 15/00**

(86) International application number:
**PCT/CN2024/111613**

(87) International publication number:
**WO 2025/097909 (15.05.2025 Gazette 2025/20)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **10.11.2023 CN 202311495692**

(71) Applicant: **Tencent Technology (Shenzhen)
Company Limited
Shenzhen, Guangdong 518057 (CN)**

(72) Inventor: **XIAO, Tongxing
Shenzhen, Guangdong 518057 (CN)**

(74) Representative: **EP&C
P.O. Box 3241
2280 GE Rijswijk (NL)**

(54) **DATA PROCESSING METHOD AND RELATED APPARATUS**

(57) The present application discloses a data processing method and a related apparatus, which can be applied to the fields of electronic maps, autonomous driving, assisted driving, smart transportation, cloud technology, artificial intelligence and the like. Absolute elevations of projection points respectively corresponding to a plurality of position points are extracted from terrain data. An elevation constraint condition set corresponding to the plurality of position points is generated on the basis of a positional relationship between the plurality of position points. An elevation distribution feature function is constructed by using relative elevation parameters respectively corresponding to the plurality of position points, and parameter solution is performed on the relative elevation parameters on the basis of the elevation distribution feature function and the elevation constraint condition set to obtain relative elevations respectively corresponding to the plurality of position points. Absolute elevations of the position points are obtained on the basis of the relative elevations of the position points and the absolute elevations of the projection points corresponding to the position points. Thus, more accurate absolute elevations are obtained, and when road rendering is performed on the basis of the absolute elevations, the rendering effect of the road can be improved.

FIG. 1

**Description**

RELATED APPLICATION

This application claims priority to Chinese Patent Application No. 2023114956927, entitled "METHOD FOR DATA PROCESSING AND RELATED APPARATUS" filed with the China National Intellectual Property Administration on November 10, 2023.

FIELD OF THE TECHNOLOGY

This application relates to the computer field, and in particular, to map data processing technologies.

BACKGROUND OF THE DISCLOSURE

With the development of society, road traffic becomes increasingly complex, and people usually need to complete route planning, route navigation, and the like with the help of electronic maps during travel. In order to make the rendering of electronic maps aesthetically pleasing and as close to the real world as possible, the roads shown in electronic maps may be three-dimensional, that is, the roads in the electronic maps may be assigned with elevation information.

The elevation information of the roads needs to be obtained in order to generate the electronic map with this information, that is, generate a three-dimensional electronic map. The related art provides a method for generating elevation information on a road using two-dimensional map data. The elevations generated in this manner are not accurate enough, which affects the effect of rendering the roads and reduces vividness of the depicted roads having elevations.

SUMMARY

To resolve the foregoing technical problem, the present disclosure provides a method for data processing and a related apparatus, so that absolute elevation(s) of a road can be determined. The determined absolute elevation can reflect a real height of a road more accurately. Rendering the road using the absolute elevation leads to a better display effect and higher vividness. Users can have better immersion experiences.

Embodiments of the present disclosure provide the following technical solutions.

In one aspect, a method for data processing is provided according to embodiments of the present disclosure. The method is executable by a computer device and comprises: obtaining terrain data of a region, in which one or more first roads are located, and a two-dimensional map of the region; obtaining, from the two-dimensional map, a plurality of road points located on the one or more first roads; extracting, from the terrain data, an absolute elevation of a respective projection point of each road point; determining a positional relationship among the road points according to the two-dimensional map; generating a set of constraint conditions on respective elevations of the road points according to the positional relationship among the road points, where the elevation of each road point refers to a relative elevation of said road point with respect to the projection point of said road point; determining an elevation function using variables representing the relative elevations of the road points; obtaining the relative elevation of each road point through solving the elevation function under the set of constraint conditions; and determining an absolute elevation of each road point using the relative elevation of said road point and the absolute elevation of the projection point of said road point.

In another aspect, an apparatus for data processing is provided according to embodiments of the present disclosure. The apparatus includes an obtaining unit, an extracting unit, a determining unit, a function-determining unit, and a solving unit. The obtaining unit is configured for obtaining terrain data of a region, in which one or more first roads are located, and a two-dimensional map of the region. The obtaining unit is configured for obtaining, from the two-dimensional map, a plurality of road points located on the one or more first roads. The obtaining unit is configured for extracting, from the terrain data, an absolute elevation of a respective projection point of each road point. The determining unit is configured for determining a positional relationship among the road points according to the two-dimensional map. The generating unit is configured for generating a set of constraint conditions on respective elevations of the road points according to the positional relationship among the road points, where the elevation of each road point refers to a relative elevation of said road point with respect to the projection point of said road point. The function-determining unit is configured for determining an elevation function using variables representing the relative elevations of the road points. The solving unit is configured for obtaining the relative elevation of each road point through solving the elevation function under the set of constraint conditions. The determining unit is configured for determining an absolute elevation of each road point using the relative elevation of said road point and the absolute elevation of the projection point of said road point.

In another aspect, a computer device is provided according to embodiments of the present disclosure. The computer device includes a processor and a memory. The memory stores a computer program and is configured for transmitting the computer program to the processor. The processor is configured for executing the foregoing method according to instructions in the computer program.

In another aspect, a computer-readable storage medium is provided according to embodiments of the present disclosure. The computer-readable storage medium stores a computer program, where the computer program when executed by a processor causes the processor to perform the foregoing method.

In another aspect, a computer program product is provided according to embodiments of the present disclosure. The computer program product comprises a computer program, where the computer program when executed by a processor causes the processor to perform the foregoing method.

Herein the road points on the first road(s) are obtained from the two-dimensional map, and the absolute elevations of the respective projection points of the plurality of road points are extracted from the terrain data. That is, the absolute elevations are extracted from data reflecting the real topography and the like of the region, and hence the determined absolute elevations of the projection points are accurate. Relative elevations of the road points are then determined. In this determination, the relative elevation is solved through optimizing a function. Specifically, the set of constraint conditions on the elevations of the road points may be generated according to the determined positional relationship among the road points, and the set of constraint conditions indicates conditions that need to be met by the elevations of the road points. Here the elevation of each road point may be represented by the relative elevation of the road point relative to its projection point. The relative elevation is the unknown variable that needs to be calculated. Hence, the elevation function is determined using the respective relative elevations of the road points as variables, and the elevation function is solved under the restriction of the set of constraint conditions to obtain the elative elevations of the road points. The absolute elevation of each road point is then obtained using the relative elevation of the road point and the absolute elevation of the projection point of the road point. These absolute elevations reflect the real height of the first road(s) more accurately. When the first road(s) are rendered using these absolute elevations, a better display effect can be achieved, and the vividness of the first roads is improved, which brings better immersion experience to users.

BRIEF DESCRIPTION OF THE DRAWINGS

To more clearly describe the technical solutions in embodiments of the present disclosure or in the related art, accompanying drawings required for describing the embodiments or the related art are briefly described below. Apparently, the accompanying drawings in the following descriptions merely show some of the embodiments of the present disclosure, and a person of ordinary skill in the art may still derive other accompanying drawings according to these accompanying drawings without creative efforts.

FIG. 1 is an architectural diagram of an application scenario of a method for data processing according to an embodiment of the present disclosure.

FIG. 2 is a flowchart of a method for data processing according to an embodiment of the present disclosure.

FIG. 3 is a schematic diagram of a top view of a three-dimensional terrain mesh according to an embodiment of the present disclosure.

FIG. 4 is a schematic diagram of roads forming a grade-separated crossing according to an embodiment of the present disclosure.

FIG. 5 is a schematic diagram of adjacent road points according to an embodiment of the present disclosure.

FIG. 6 is a schematic diagram of roads forming a road junction according to an embodiment of the present disclosure.

FIG. 7 is a flowchart of a process of determining an absolute elevation of a projection point according to an embodiment of the present disclosure.

FIG. 8 is a flowchart of a process of determining an absolute elevation of a projection point according to another embodiment of the present disclosure.

FIG. 9 is a schematic diagram of a top view of first roads according to an embodiment of the present disclosure.

FIG. 10 is a structural diagram of an apparatus for data processing according to an embodiment of the present disclosure.

FIG. 11 is a structural diagram of a terminal according to an embodiment of the present disclosure.

FIG. 12 is a structural diagram of a server according to an embodiment of the present disclosure.

DESCRIPTION OF EMBODIMENTS

Embodiments of the present disclosure are described below with reference to the accompanying drawings.

For ease of understanding, related concepts are first described herein.

An absolute elevation refers to a distance from a road point to an absolute datum in the gravity direction and may be simply called the elevation in practice.

A relative elevation refers to a distance from a road point to a certain reference datum in the gravity direction and may be called an assumed elevation. Herein the relative elevation of the road point is considered as a difference between the height of the road point, i.e., a point on a road, and the height of a corresponding point at a terrain surface. In other words, the reference datum is the surface of the terrain (without the road). The corresponding point at the terrain surface may refer to a projection of the road point (equivalent to a part of the road located at the coordinates of the road point) on the surface of the terrain, and this point may also be called a projection point.

A standard-definition (SD) map refers to an ordinary navigation electronic map, which is generally a two-dimensional map, that is, a map has information on absolute elevations but only a height relationship between roads, e.g., zlevel information of the roads.

A high-definition (HD) map refers to a highly accurate map, e.g., a map presenting features of roads accurately and comprehensively.

Optimization refers to a branch of applied mathematics. It mainly refers to a process of finding a combination of values of variables in a function that optimizes (e.g., maximizes or minimizes) an output of the function under a certain constraint condition.

Convex optimization is a sub-field of the mathematical optimization. It studies the problem of minimizing a convex function defined in a convex set. Generally, the convex optimization is simpler than a common mathematical optimization problem.

An interior-point method is an algorithm for solving a linear programming or nonlinear convex optimization problem.

When elevation information of a road is generated based on two-dimensional map, the generated elevation information is usually a relative elevation of the road. Generally, the relative elevation is not accurate enough, and it is difficult to reflect a real height of the road. Consequently, road rendering effects are affected, and vividness of a road displayed with elevation is reduced.

To resolve the foregoing technical problem, an embodiment of the present disclosure provides a method for data processing. According to the method, an absolute elevation of each road point is determined based on a relative elevation of the road point and an absolute elevation of a projection point of the road point. These absolute elevations reflect the real height of the first road(s) more accurately. When the first road(s) are rendered using these absolute elevations, a better display effect can be achieved, and the vividness of the first roads is improved, which brings better immersion experience to users.

The method for data processing provided in this embodiment of the present disclosure is applicable to the fields such as electronic maps, autonomous driving, assisted driving, intelligent traffic, cloud technologies, and artificial intelligence. In these fields, an electronic map may need to be generated. During rendering of a road on an electronic map, an absolute elevation of the road may be determined by using the method provided in this embodiment of the present disclosure, and then the road is rendered based on the absolute elevation. A scenario in which the electronic map is used may be, for example, a scenario such as autonomous driving, traffic management, city planning, tourism, logistics, gaming, virtual reality, or augmented reality. This is not limited in this embodiment of the present disclosure.

The method for data processing for an electronic map provided in this embodiment of the present disclosure may be performed by a computer device. The computer device may be, for example, a server or a terminal. The server may be an independent physical server, a server cluster or distributed system including a plurality of physical servers, or a cloud server providing cloud computing services. The terminal includes, but is not limited to, a smartphone, a computer, an intelligent voice interaction device, a smart home appliance, an in-vehicle terminal, an aerial vehicle, and the like.

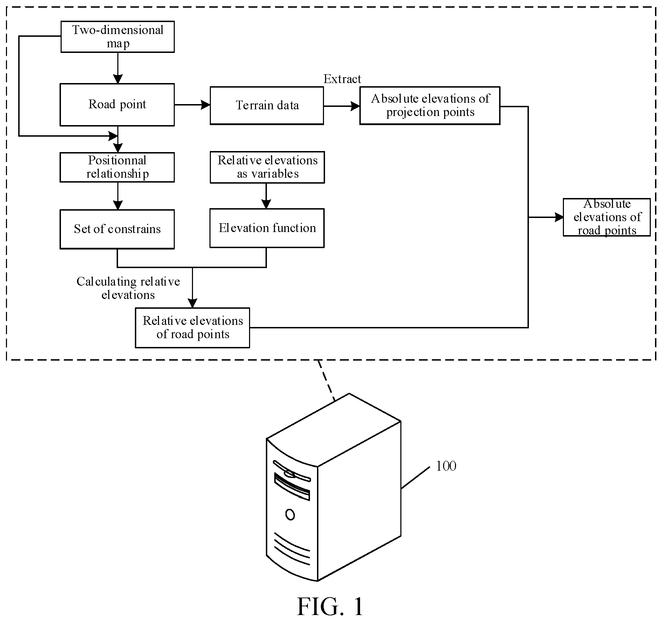

FIG. 1 is an architectural diagram of an application scenario of a method for data processing according to an embodiment of the present disclosure. The application scenario is described by using an example in which a computer device performing the method is a server. The application scenario may include a server 100.

When a three-dimensional electronic map needs to be generated, elevation information of a road needs to be determined. Herein the elevation information may refer to an absolute elevation of the road, so that road rendering can be performed using the absolute elevation to generate the three-dimensional electronic map having the elevation information.

A road of which the absolute elevation is to be determined may be called a first road. The server 100 may obtain terrain data corresponding to the first road and two-dimensional map corresponding to the first road. The first road may be a road of which an absolute elevation currently needs to be determined for rendering. There may be one or more first roads. The terrain data is data describing an actual terrain (e.g., surface topography of a ground surface without the road) of a region in which the first road is located. The terrain data may reflect undulations of the ground surface in such region. The terrain data may be obtained via public access. The terrain data is thus known data. The two-dimensional map may be a common electronic navigation map. The two-dimensional map provides information on a road network (namely, a two-dimensional network formed by roads). The electronic navigation map may also be called two-dimensional road-network data. The two-dimensional map does not have the elevation information, and it provides longitude and latitude of the roads and positional relationship among the roads.

Generally, the first road may be discretized into multiple road points, each road point has its own position in the two-dimensional map. Therefore, a set of respective absolute elevations of all road points on the first road may serve as the absolute elevation of the first road. The absolute elevation of the road point may be a sum of a relative elevation of the road point with respect to its projection point and an absolute elevation of its projection point. Hence, the server 100 may calculate the relative elevation of the road point with respect to its projection point and the absolute elevation of its projection point separately. The projection point of a road point may refer to a vertical projection of the road point (equivalent to a part of the road located at the coordinates of the road point) on a surface of the terrain (e.g., a ground surface without the road) of the region in which the first road is located.

During calculation of the absolute elevation of the projection point, the server 100 may obtain multiple road points of the first road from the two-dimensional map and extract absolute elevations of projection points of the road points from the terrain data with reference to the positions (e.g., the coordinates) of the road points. Since the absolute elevation is extracted from the real terrain data, it can truly reflect a real terrain such as the undulations of the terrain.

The server 100 may then determine a relative elevation of the road point. In this determination, the relative elevation is solved through optimizing a function. The server 100 may specifically generate a set of constraint conditions on the elevations of the road points according to the determined positional relationship among the road points, and the set of constraint conditions indicates conditions that need to be met by the elevations of the road points. Here the elevation of each road point may be represented by the relative elevation of the road point relative to its projection point. The relative elevation is the unknown variable that needs to be calculated Therefore, the server 100 may determine an elevation function using the respective relative elevations of the road points as variables and solves the elevation function under the restriction of the set of constraint conditions to obtain the elative elevations of the road points.

The server 100 then obtains an absolute elevation of each road point using the relative elevation of the road point and the absolute elevation of the projection point of the road point. These absolute elevations reflect the real height of the first road(s) more accurately. When the first road(s) are rendered using these absolute elevations, a better display effect can be achieved, and the vividness of the first roads is improved, which brings better immersion experience to users.

In a specific implementation of the present disclosure, user information and other relevant data may be involved in the whole process. When the above embodiments of the present disclosure are applied to specific products or technologies, a separate consent or separate permission of a user needs to be obtained, and acquisition, use, and processing of relevant data need to comply with relevant laws, regulations, and standards of relevant countries and regions.

The method provided in this embodiment of the present disclosure may relate to artificial intelligence technologies, to automatically implement data processing through the artificial intelligence technologies. The elevation information obtained based on the method for data processing in this embodiment of the present disclosure may be configured for generating a three-dimensional electronic map, for example, in the fields of autonomous driving, assisted driving, and intelligent traffic, to implement lane-level navigation based on real terrain.

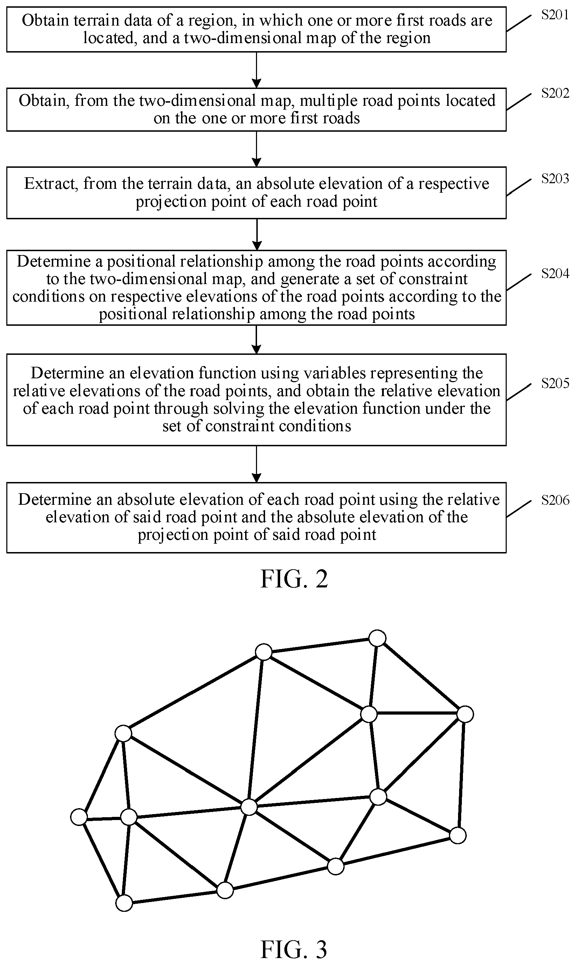

The method for data processing provided in this embodiment of the present disclosure is described below with reference to the accompanying drawings by using the computer device as a server. Reference is made to FIG. 2. FIG. 2 is a flowchart of a method for data processing. The method includes the following operations.

S201: Obtaining terrain data of a region, in which one or more first roads are located, and a two-dimensional map of the region.

A road of which an absolute elevation is to be determined serves as a first road. The server may obtain the terrain data and the two-dimensional map for the first road. The absolute elevation may be determined for rendering the first road. There may be one or more first roads.

During road rendering, rendering may be performed using a pre-delimited region as a unit, that is, roads in one region are rendered each time. In this way, during determination of the absolute elevation of the road, the roads in one region may be used as first roads, such that absolute elevations of road points on the first roads are calculated. The regions may be delimited according to boundaries of cities, boundaries towns, position information, or the like. This is not limited in this embodiment of the present disclosure.

The terrain data is data describing an actual terrain (e.g., surface topography of a ground surface without the road) of the region in which the first road is located. The terrain data may reflect undulations of the ground surface in such region. The terrain data may be obtained via public access and thus may be directly obtained and used with costs, so that costs of data processing are reduced.

A format of the terrain data is not limited herein. In embodiments of the present disclosure including the embodiments of both the claims and the specification (hereinafter referred to as "all embodiments of the present disclosure"), the terrain data may be a three-dimensional mesh (also called a terrain mesh) formed by a multiple patches, and each vertex in the three-dimensional terrain mesh is assigned with its absolute elevation. The patches forming the three-dimensional terrain mesh may be of different shapes, for example, they may be triangular, square, rectangular, and hexagonal. This is not limited in the present disclosure. As an example, the patches are triangular patches. A top view of a three-dimensional terrain mesh formed by a multiple triangular patches may refer to FIG. 3. In FIG. 3, white circles represent vertexes of the three-dimensional terrain mesh, connection lines between the vertexes are edges of the three-dimensional terrain mesh, each triangle represents one triangular patch, and one triangular patch may be represented by a set of its vertexes or edges.

The two-dimensional map may be an ordinary navigation electronic map not providing elevations, but providing longitude, latitude, and a positional relationship among the roads. The two-dimensional map has low production costs, and its data can be obtained with costs, thereby reducing costs of data processing.

S202: Obtain, from the two-dimensional map, multiple road points located on the one or more first roads.

Usually, the first road in the two-dimensional map may be discretized into multiple road points, each of which has its own coordinates. Therefore, a set of absolute elevations of all road points on the first road may form the absolute elevation of the first road. The absolute elevation of the road point may be a sum of a relative elevation of the road point with respect to a projection point of the road point and an absolute elevation of this projection point. Therefore, the server may calculate the relative elevation of the road point with respect to the projection point of the road point and the absolute elevation of the projection point separately. The projection point of the road point may be a vertical projection of the road point on a surface of the terrain (e.g., a ground surface without the road) of the region in which the first road is located, that is, the road point is projected to the surface of the terrain along gravity direction to obtain its projection point.

During calculation of the absolute elevation of the projection point, the server may obtain the multiple road points on the first road from the two-dimensional map and then extract from the terrain data the absolute elevations of the respective projection points of the of road points using, for example, the coordinates of the road points. The absolute elevation is thus extracted from real terrain data and can truly reflect a real terrain status such as undulations of a terrain.

In all embodiments of the present disclosure, the multiple road points may comprise all road points located on the first road(s). In this case, the absolute elevation(s) of the first road(s) may be directly obtained through S201 to S206. Alternatively, the multiple road points may be only a part of all road points located on the first road(s). After the absolute elevations of these road points are calculated by through S201 to S206, absolute elevations of the remaining road points may be obtained through interpolation on the absolute elevations of these road points. Therefore, a process from S201 to S206 is not necessary to be performed on all road points located on the first road(s) for calculation of the absolute elevations, thereby reducing the related calculation amount and improving calculation efficiency.

When the multiple road points are a part of all road points on the first road, the part of road points are representative road points on the first road. These road points may be also called control points. The control points are usually of the following two types.

(1) Ending points of the first road, i.e., a start point and an end point of a first road

(2) Road point located on the first road at a position of a grade-separated crossing

A road usually has its start point and its end point but may not form a grade-separated crossing with another road. Hence, control points may be determined in different manners.

A manner of obtaining the multiple road points located on the first road(s) from the two-dimensional map may be as follows. A start point and an end point of the first road are obtained. Then, it is determined whether the two-dimensional map indicates that this first road and another first road form a grade-separated crossing. Generally, the positional relationship among the roads may be that the roads form a grade-separated crossing, the roads form a road junction, the roads are not related, or the like. Because the two-dimensional map can provide a positional relationship among the roads, the positional relationship among the first roads can be determined based on the two-dimensional map. When the two-dimensional map indicates that the first road and another first road form the grade-separated crossing, a crossing point is obtained from the two-dimensional map, and then the crossing point, the start point, and the end point are determined to serve as the foregoing multiple road points on this first road. In the two-dimensional map, the crossing point is located on this first road and represents the grade-separated crossing. When the two-dimensional map indicates that the first road does not form a grade-separated crossing with any other first road, the start point and the end point are determined to serve as the foregoing multiple road points on this first road.

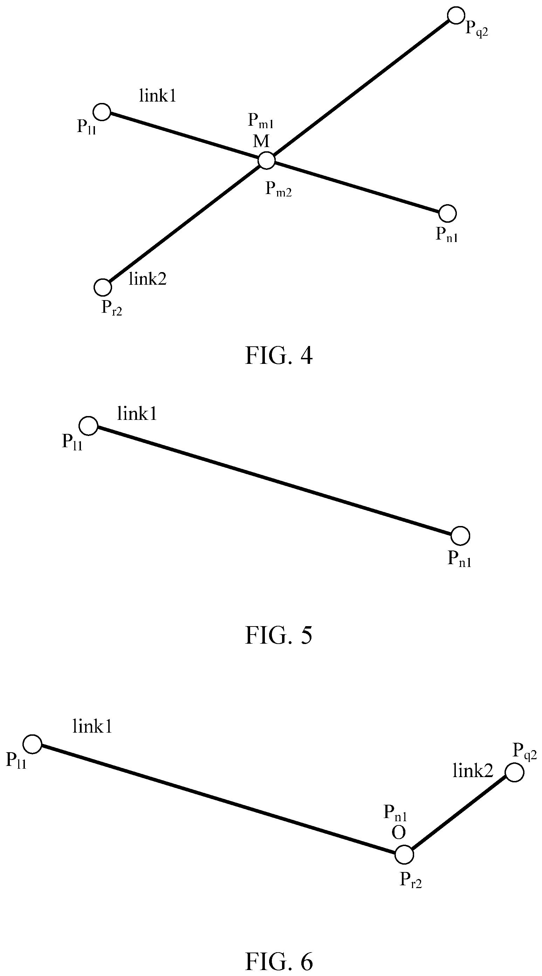

The grade-separated crossing represents a region in which roads overlap with each other when viewed in a vertical direction. A height difference exists between two roads forming the grade-separated crossing, that is, one road is higher and the other is lower. The roads forming the grade-separated crossing may be called roads having an "overlaying relationship", and the overlapping region of the two roads may be called an overlaying position. The two-dimensional map provides a height relationship among different roads (e.g., indicates which road is higher), and hence whether the positional relationship among the first roads indicates the overlaying relationship can be determined according to the two-dimensional map. As an example, road 1 denoted by link 1 is the first road, as shown in FIG. 4. FIG. 4 is a top view of link1 and link2 (that is, link1 and link2 are viewed from the vertical direction). The positional relationship indicates the first road link1 forms a grade-separated crossing with link2. Because link1 and link2 in FIG. 4 are represented by line segments, an overlapping region between link1 and link2 may be a point, that is, the overlaying position is point M as shown in FIG. 4. Each of link1 and link2 comprises multiple road points. A road point on link1 located at the overlaying position is denoted by $P_{m1}$, and a road point on link2 located at the overlaying position is denoted by $P_{m2}$, as shown in FIG. 4. Therefore, the positional relationship among the first roads indicates the first road link1 is associated with link2 by the overlaying relationship, and the crossing point of link1 is $P_{m1}$. Assuming a start point of link1 is $P_{l1}$, and an end point of link1 is $P_{n1}$, points $P_{l1}$, $P_{n1}$, and $P_{m1}$ are obtained as the road points of link1. When there are multiple first roads, the road points for calculating an elevation of other roads may be determined in a similar manner.

In this way, in the foregoing manner, with reference to the positional relationship among the roads indicated by the two-dimensional map, the road points on the first road(s) of which absolute elevation(s) need to be calculated are determined, and the determined road points are ensured to be representative. Hence, the absolute elevation of the first road can be more accurately determined.

S203: Extract, from the terrain data, an absolute elevation of a respective projection point of each road point.

In all embodiments of the present disclosure, an absolute elevation of a road point may comprise a relative elevation of the road point with respect to a projection point of the road point and an absolute elevation of the projection point. Therefore, after obtaining the road point, the absolute elevation of the projection point of the road point and the relative elevation of the road point with respect to the projection point may be separately calculated. During calculation of the relative elevation of the road point with respect to the projection point of the road point, a constraint condition on elevation may be constructed with reference to the absolute elevations of the projection points of the road points. Therefore, the absolute elevation of the projection point of the road point may be calculated on a basis of the terrain data first.

The projection point of the road point in the terrain data may be a point obtained by projecting the road point onto the real surface of the terrain along the vertical direction. When the terrain data is the three-dimensional terrain mesh including multiple patches, because each vertex in the three-dimensional terrain mesh is assigned with its absolute elevation, the absolute elevation of the projection point may be determined using the absolute elevations of the vertices of a patch on which the projection point is located.

S204: Determine a positional relationship among the road points according to the two-dimensional map and generate a set of constraint conditions on respective elevations of the road points according to the positional relationship among the road points.

The server may determine the relative elevation of the road point with respect to the projection point of the road point. In a process of determining the relative elevation, the server converts the determining of the relative elevation into a process of solving a function. Specifically, the server may determine the positional relationship among the multiple road points according to the two-dimensional map and generate the set of constraint conditions on respective elevations of the road points according to the positional relationship between the multiple road points.

The road points are located on the first roads, and hence the positional relationship among the roads affects the positional relationship among the road points. One first road includes at least two of the multiple road points for elevation calculation. Therefore, the at least two road points on the first road comprises at least one pair of adjacent road points. Here the positional relationship between the adjacent road points on the same road is also called "neighboring relationship". Whether there is another kind of positional relationship may be further determined according to the positional relationship among the first roads.

In all embodiments of the present disclosure, the positional relationship between the multiple road points may be determined according to the two-dimensional map in the following manner. First adjacency, which indicates all pairs of adjacent road points that are located on the same first road among the plurality of road points, is determined. A positional relationship among the first roads is determined from the two-dimensional map. The positional relationship among the road points is determined according to the positional relationship among the first roads and the first adjacency.

Different positional relationships among the first roads may lead to different positional relationships among the road points. When the positional relationship among the first roads indicates that no first roads are associated, the first adjacency indicating the neighboring relationship of the adjacent road points may be determined as the only positional relationship among the multiple road points. "No first roads are associated" may refer to that there is only one first road, or that there are multiple roads not intersecting, connecting, or overlapping with each other on a plane.

For example, FIG. 5 shows only one first road link1, and the first road includes two road points, namely, $P_{l1}$ and $P_{n1}$. $P_{l1}$ and $P_{n1}$ are adjacent, and a positional relationship between $P_{l1}$ and $P_{n1}$ is the neighboring relationship.

When the positional relationship among the first roads indicates that at least two first roads form a grade-separated crossing, a respective first road point that represents the grade-separated crossing and is located on each of the at least two first roads is obtained from the two-dimensional map, and a height order (i.e., a magnitude order of heights) of the respective first road points of the at least two first roads is determined from the two-dimensional map. Then, it is determined that the positional relationship among the road points comprises the height order associating these respective first road points and the first adjacency separately associating the road points in each pair of adjacent road point.

As an example, FIG. 4 is the top view of link1 and link2, and a positional relationship between link1 and link2 is the overlaying relationship. Road points of link1 are $P_{l1}$, $P_{n1}$, and $P_{m1}$. Road points of link2 are $P_{r2}$, $P_{q2}$, and $P_{m2}$. An overlaying position between link1 and link2 is denoted by point M. A road point on link1 located at the overlaying position is $P_{m1}$. A road point on link2 located at the overlaying position is $P_{m2}$. Therefore, the height order of $P_{m1}$ and $P_{m2}$ is defined in the map. Among the three road points on link1, $P_{l1}$ and $P_{m1}$ are adjacent, and $P_{m1}$ and $P_{n1}$ are adjacent. Therefore, $P_{l1}$ and $P_{m1}$ have the neighboring relationship, and $P_{m1}$ and $P_{n1}$ have the neighboring relationship. Similarly, on link2, $P_{r2}$ and $P_{m2}$ have the neighboring relationship, and $P_{m2}$ and $P_{q2}$ have the neighboring relationship. Therefore, for the multiple road points $P_{l1}$, $P_{n1}$, $P_{m1}$, $P_{r2}$, $P_{q2}$, and $P_{m2}$, the positional relationship between the multiple road points includes the height order associating $P_{m1}$ and $P_{m2}$ and the first adjacency separately associating: $P_{l1}$ and $P_{m1}$, $P_{m1}$ and $P_{n1}$, $P_{r2}$ and $P_{m2}$, and $P_{m2}$ and $P_{q2}$.

When the positional relationship among the first roads indicates that at least two first roads are connected to each other at a road junction, a respective second road point that represents the road junction and located on each of the at least two first roads is obtained from the two-dimensional map, and second adjacency, which indicates that the respective second road points of the at least two first roads are adjacent to each other, is determined. Then, it is determined that the positional relationship among the road points comprises the first adjacency separately associating the road points in each pair of adjacent road points and the second adjacency associating the respective second road points.

Two roads may be connected in a head-to-tail manner, e.g., an end point of a road coincides with a start point of another road, to form a road junction, and a positional relationship between these roads is called a "connection relationship". A position at which two roads are connected may be called a connection position. As an example, FIG. 6 is a top view of link1 and link2. Link1 and link2 are connected at point O, that is, end point $P_{n1}$ of link1 and start point $P_{r2}$ of link2 coincide at point O. Therefore, the second adjacency indicates link1 and link2 are associated. Road points of link1 may be $P_{l1}$ and $P_{n1}$, and road points of link2 may be $P_{r2}$ and $P_{q2}$. A connection position between link1 and link2 is a position indicated by point O. Correspondingly, a road point on link1 at the connection position is $P_{n1}$, and a road point on link2 at the connection position is $P_{r2}$. Therefore, $P_{n1}$ and $P_{r2}$ are connected as the same point. The two road points $P_{l1}$ and $P_{n1}$ on link1 are adjacent. Therefore, $P_{l1}$ and $P_{n1}$ have the neighboring relationship. Similarly, on link2, $P_{r2}$ and $P_{q2}$ have the neighboring relationship. Therefore, for the multiple road points $P_{l1}$, $P_{n1}$, $P_{r2}$, and $P_{q2}$, the positional relationship between the multiple road points comprises the first adjacency separately associating $P_{l1}$ and $P_{n1}$ and associating $P_{r2}$ and $P_{q2}$, and the second adjacency associating $P_{n1}$ and $P_{r2}$.

When the positional relationship among the first roads indicates both the overlaying relationship and the connection relationship, road points at the overlaying position are obtained from the first roads having the road overlaying relationship, and it is determined that these road points are associated by their height order. Road points at the connection position are obtained from the first roads having the road connection relationship, and it is determined that these road points are associated by respective second adjacency. Accordingly, it is determined that the positional relationship among the multiple road points comprises the height order associating the road points at the same overlaying position, the second adjacency associating the road points at the same connection position, and the first adjacency separately associating the road points in each pair of adjacent road points.

Hence, the positional relationship among the road points on the first roads is determined accordingly to the overlaying relationship and the connection relationship among the first roads, and thus the positional relationship between the multiple road points is determined thoroughly and comprehensively. It further facilitates ensuring that a set of constraint conditions subsequently constructed using the positional relationship can define a comprehensive condition that the elevations need to meet, thereby improving accuracy of the determined relative elevations.

The set of constraint conditions describes the conditions that respective elevations of the multiple road points need to be met. The elevation of each road point may refer to the relative elevation of the road point with respect to its projection point. Since the absolute elevation of each road point is a sum of the absolution elevation of its projection point and the relative elevation of the road point with respect to its projection point and the absolution elevation of its projection point can be read from the terrain data, the condition restricting the relative elevation of each road point with respect to its projection point may be regarded as conditions restricting its absolution elevation.

In all embodiments of the present disclosure, the foregoing "elevation of the road point" may be a relative elevation with respect to a reference datum. The relative elevation of the road point with respect to its projection point may represent the relative elevation of the road point with respect to the reference datum when the surface of the terrain is flat.

When the surface of the terrain is flat but has undulations, the undulations in the terrain may be considered when constructing the set of constraint conditions. In all embodiments of the present disclosure, the foregoing "elevation of the road point" may be an absolute elevation the road point, and the absolute elevation of each road point is represented by the relative elevation of the road point with respect to the projection point of the road point and an absolute elevation of the projection point of the road point. Because an absolute elevation in the elevation constraint condition is represented by a relative elevation of a road point with respect to a projection point of the road point and an absolute elevation of the projection point of the road point and the absolute elevation of the projection point of the road point is determined based on real terrain data, when solving the equation, the terrain data and the two-dimensional map are combined to construct the elevation constraint condition with consideration of the undulations in the terrain, so that the solved relative elevation can be more accurate.

The set of constraint conditions comprise elevation constraint condition. One elevation constraint condition is usually constructed using absolute elevations of two road points associated in the positional relationship among the multiple road points. In all embodiments of the present disclosure, generating the set of constraint conditions on respective elevations of the road points according to the positional relationship among the road points may comprise following steps. Third road points, which are associated in the positional relationship, among the plurality of road points are obtained. A first constraint condition on elevations of the third road points is generated according to a manner of association among the third road points. It is determined that the set of constraint conditions comprises the first constraint condition.

Different positional relationships among the road points lead to different elevation constraint conditions. The elevation constraint condition may be an overlaying height constraint condition, a road slope constraint condition, or a height continuity constraint condition.

> 1. Overlaying height constraint condition. The two-dimensional map may indicate the height relationship between two roads that form the grade-separated crossing, but it need not provide a height difference between the two roads at the grade-separated crossing. The height difference between the two roads at the overlaying position cannot be too small in the rendering, otherwise, they would seem to be closely stacked and have a poor visual effect. Therefore, a minimum height difference at the grade-separated crossing needs to be set.

The height of the road may be represented by the elevation. When the elevation of the road point is its absolute elevation, it is assumed that a road point on an upper first road located at the grade-separated crossing is $P_u$, and a road point on a lower first road located at the grade-separated crossing is $P_d$, which indicates the height order associating $P_n$ and $P_d$, i.e., $P_u$ is higher $P_d$. In a top view, the two road points overlap, and projection points of the two road points on the terrain data are located at the same position.

Therefore, to ensure that a difference between absolute elevations of the two road points meets a requirement, the absolute elevation of the road point may be represented by an absolute elevation of a corresponding projection point and a relative elevation of the road point with respect to the projection point. Because the projection points of the two road points are at the same position, that is, absolute elevations of their projection points are the same, a difference between relative elevations of the two road points with respect to their respective projection point shall meet the requirement. Therefore, the overlaying height constraint condition may be expressed as follows.

$$h_u - h_d \geq H \qquad\qquad (1)$$

$h_u$ is a relative elevation of $P_u$ with respect to its projection point, $h_d$ is a relative elevation of $P_d$ with respect to its projection point, and H is a minimum height difference in the grade-separated crossing, namely, the threshold of height difference. H may be set according to an actual requirement. In all embodiments of the present disclosure, H may be 4 meters. In a process of calculating the relative elevation of the road point, because the relative elevation is unknown and needs to be calculated, in the overlaying height constraint condition, the relative elevation of the road point with respect to its projection point is utilized in replace of the relative elevation of the road point with respect to a reference datum. The value of the relative elevation is calculated through solving an equation as illustrated later.

When a target elevation is the relative elevation, it is ensured that the difference between relative elevations of the two road points with respect to the projection points meets the requirement. For the overlaying height constraint condition, refer to formula (1).

2. Road slope constraint condition. Absolute elevations of the road points need to meet that a change of a road is gentle in slope, that is, the surface of the road shall not increase or decrease suddenly. Therefore, the maximum value of the road slope needs to be set.

For any two adjacent road points $P_p$ and $P_n$ on the same first road, a point pair of $P_p$ and $P_n$ have the neighboring relationship and are associated by the first adjacency.

As discussed above, the elevation of the road point may refer to the absolute elevation. It is assumed that an absolute elevation of a projection point of $P_p$ is $h_p^a$, a relative elevation of $P_p$ with respect to its projection point is $h_p$, an absolute elevation of a projection point of $P_n$ is $h_n^a$, and a relative elevation of $P_n$ with respect to its projection point is $h_n$. Therefore, the road slope constraint condition may be expressed as follows.

$$-S_{pn}D_{pn} \leq \left(h_p^a + h_p\right) - \left(h_n^a + h_n\right) \leq S_{pn}D_{pn} \qquad (2)$$

$S_{pn}$ is a maximum slope tangent, i.e., an upper threshold of a slope, between $P_p$ and $P_n$. $S_{pn}$ may be equal to a radian value of 1 degree in practice. $D_{pn}$ is a horizontal distance between $P_p$ and $P_n$. After two-dimensional position information (for example, longitude-latitude coordinates) of the road points is obtained from the map, $D_{pn}$ may be calculated using the position information.

As discussed above, the elevation of the road point may refer to the absolute elevation with respect to the reference datum. The road slope constraint condition in this case may be expressed as follows.

$$-S_{pn}D_{pn} \leq h_p - h_n \leq S_{pn}D_{pn} \qquad (3)$$

3. Height continuity constraint condition. Two roads having the connection relationship need to be continuous at their connection position. Otherwise, there is a sudden height change at the connection, i.e., one road is rendered higher than the other road at the connection, affecting a visual effect.

Usually, the two roads having the connection relationship may be called a preceding road and a succeeding road. As discussed above, the elevation of the road point may refer to the absolute elevation. It is assumed that the end point of the preceding road is $P_e$, the start point of the succeeding road is $P_s$, and both $P_e$ and $P_s$ belong to the multiple road points of the first roads. $P_e$ and $P_s$ are associated by the second adjacency. In a top view, the two road points overlap, and projection points of the two road points on the terrain data should be the same. Therefore, in order to ensure that absolute elevations of the two road points are equal (to meet the continuous condition), relative elevations of the two road points with respect to their projection point are equal. That is, the height continuity constraint condition may be expressed as follows.

$$h_e = h_s \qquad (4)$$

$h_e$ is a relative elevation of $P_e$ with respect to its projection point, and $h_s$ is a relative elevation of $P_s$ with respect to its projection point. The relative elevation is unknown and needs to be calculated. Hence, in the height continuity constraint condition, the relative elevations of the road points with respect to their projection point are used in replace of the relative elevation with respect to the reference datum, and a value of to the relative elevation of the road points with respect to their projection point are calculated through solving an equation as illustrated below.

As discussed above, the elevation of the road point may refer to the absolute elevation with respect to the reference datum. In this case, the relative elevations of the two road points also need to be equal. The height continuity constraint condition may also refer to equation (4).

Based on the foregoing descriptions of the different elevation constraint conditions, a manner of generating the first constraint condition on elevations of the third road points according to a manner of association among the third road points may be as follows. When all the third road points represent a same grade-separated crossing formed by at least two first roads and each third road point is located on a respective one of the at least two first roads in the two-dimensional map, the first constraint condition is generated using the height order and a threshold of height difference. In this case, the first constraint condition is the overlaying height constraint condition, and its form may refer to equation (1). The height order indicates a magnitude order of heights among the third road points, that is, which road point is higher/lower than which road point in absolution elevation. Thereby, the relative elevations of the road points can be substituted into equation (1) to obtain the first constraint condition.

When the third road points are a pair of adjacent road points located on the same first road in the two-dimensional map, the first constraint condition is generated using the position of each third road point in the two-dimensional map and a threshold of road slope. In this case, the first constraint condition is the road slope constraint condition and may refer to equation (2) or equation (3). The two-dimensional position information of the third road points is used for calculating the horizontal distance among the third road points, and a slope threshold is used to obtain the maximum slope tangent. In addition, absolute elevations of the projection points of the third road points may be obtained as described in S203. The relative elevations of the third road points with respect to their projection points may serve as unknown variables and are used in replacement of the relative elevations with respect to the reference datum. The maximum slope tangent, the distances among the third road points, the absolute elevations of the respective projection points of the third road points, and the relative elevations of the third road points with respect to their projection points may be substituted into equation (2) to obtain the road slope constraint condition. Alternatively, when the elevation of the road point may refer to the absolute elevation with respect to the reference datum, the maximum slope tangent, the horizontal distance among the third road points, and the relative elevations of the third road points may be substituted into equation (3) to obtain the road slope constraint condition.

When all the third road points represent the same road junction formed by at least two first roads and each third road point is located on a respective one of the at least two first roads in the two-dimensional map, the first constraint condition, which indicates that the third road points have identical elevations, is generated. In this case, the first constraint condition is the height continuity constraint condition and may refer to equation (4). The relative elevations of the third road points with respect to their projection points may serve as unknown variables and are used in replacement of the relative elevations with respect to the reference datum. The relative elevations of the third road points may be substituted into equation (4) to obtain the height continuity constraint condition.

In this way, the elevation constraint condition(s) are constructed to indicate the positional relationship among the multiple road points. The constructed elevation constraint condition(s) clearly reflects the positional relationship among the multiple road points. Correspondingly, calculating the relative elevations of the road point under the elevation constraint conditions ensures that the calculated relative elevations are accurate.

S205: Determined an elevation function using variables representing the relative elevations of the road points and obtain the relative elevation of each road point with respect to its projection point through solving the elevation function under the set of constraint conditions.

In all embodiments of the present disclosure, the determination of the relative elevations is converted into a process of mathematical optimization. That is, the determination of the relative elevations is converted into finding values of variables in the elevation function. The relative elevations are unknown variables. The relative elevation here refers to the relative elevation of the road point with respect to its projection point and is the variables of which the values need to be found. In other words, the relative elevation serves as an optimization variable (also called a decision variable). The elevation function is determined (e.g., constructed), and the values of the relative elevations of the road points in the elevation function is found under the set of constraint conditions and an objective of the optimization.

In all embodiments of the present disclosure, the relative elevations of the road points may be required to be as concentrated as possible to facilitate rendering. In this case, squares of the relative elevations of all the road points may be summed to construct the elevation function. In all embodiments of the present disclosure, elevation function may be expressed as follows.

$$V = \sum_{i=1}^{n} h_i^2 \qquad\qquad (5)$$

V represents an output (also called an elevation metric) of the elevation function, n is a total quantity of road points, and $h_i$ represents the relative elevation of an $i^{th}$ road point. The relative elevations of the road points are unknown variable and may refer to the relative elevations of the road points with respect to their projection points.

The rendered road may be required to close to the real terrain, and hence magnitude of the relative elevations of the road points on the road with respect to their projection points may be required to be small. Therefore, when calculating the relative elevations, an objective of the optimization may be that the output of the elevation function is as small as possible. The relative elevations in the elevation function are accordingly calculated under the set of constraint conditions and this objective.

In all embodiments of the present disclosure, the elevation function may be preset in an elevation optimizer. The above calculation process is performed by the elevation optimizer to obtain the relative elevations of the multiple road points.

In all embodiments of the present disclosure, a respective initial relative elevation of each road point may be first obtained. An elevation metric is calculated through substituting the initial relative elevations of the road points into the elevation function. Values of the initial relative elevations of the road points are then adjusted under the set of constraint conditions, until the elevation metric meets a preset condition (e.g., the elevation metric being minimized) to obtain the relative elevations of the road points.

A source of obtaining the initial relative elevation is not limited herein. The initial relative elevation may be randomly generated or may be a preset value. For example, the initial value of each relative elevation may be 0.

Here the initial elevation metric may be determined by substituting the initial relative elevations into the elevation function. If the initial elevation metric does not meet the preset condition or the multiple initial relative elevations do not satisfy any elevation constraint condition in the set of constraint conditions, the multiple initial relative elevations are adjusted iteratively until the elevation metric calculated using the adjusted relative elevations meets the condition and meet each elevation constraint condition in the set of constraint conditions. At this time, the adjusted relative elevations serve as the relative elevations of the multiple road points.

There are many mature mathematical tools that can be used for mathematical optimization, for example, an interior-point method for convex optimization. Parameter calculation can be performed efficiently by using these mathematical tools. Herein a relative-elevation optimizer may be generated by using an optimization concept. Mathematical optimization tools are not limited herein and may be any optimization tools.

By using the foregoing parameter solving manner, in an entire parameter calculation process, the relative elevation may be continuously adjusted by using an optimization tool to obtain the relative elevations meeting the preset condition and the set of constraint conditions. This process does not need additional prior knowledge or manual intervention, and fully automatic and low-cost calculation can be performed.

S206: Determine an absolute elevation of each road point using the relative elevation of said road point and the absolute elevation of the projection point of said road point.

After the relative elevation of each of the multiple road points with respect to its projection point and the absolute elevation of its projection point are obtained, the server may obtain the absolute elevation of the road point using the relative elevation of the road point with respect to its projection point and the absolute elevation of its projection point. For example, the relative elevation of the road point with respect to its projection point and the absolute elevation of its projection point may be summed to obtain its absolute elevation.

After the absolute elevations of the multiple road points are obtained, the absolute elevation(s) of the first road(s) may be obtained according to the absolute elevations of the road points, and thereby road rendering is available using the absolute elevation(s) of the first road(s).

The absolute elevation of the first road may be determined in different manners when different road points are selected from the first road(s). If the selected multiple road points are all road points of the first road(s), the absolute elevations of the multiple road points may be directly used to form the absolute elevation(s) of the first road(s).

When the multiple road points are a part of all road points located on the first road(s), absolute elevations of other road points on the first road(s) may be further calculated. In this case, the server may obtain, from the two-dimensional map, a road point that is located on a first road among the one or more first road, to serve as an intermediate road point, where the intermediate road point does not belong to the plurality of road points. Road points, which are on the first road and adjacent to the intermediate road point, are obtained from the plurality of road points and serve as reference road points. An absolute elevation of the intermediate road point is determined through interpolation on absolute elevations of the reference road points. An absolute elevation of the first road is determined to be a set of elevations comprising: the absolute elevations of road points, which are among the plurality of road points and located on the first road; and the absolute elevation of the intermediate road point.

An example is shown in FIG. 6. For link1, after absolute elevations of $P_{l1}$ and $P_{n1}$ are calculated, the absolute elevation of each of the road points between $P_{l1}$ and $P_{n1}$ is calculated through interpolation. The manner of interpolation is not limited herein, for example, linear interpolation may be performed.

In this way, interpolation is performed based on the determined absolute elevations of the road points, so that an absolute elevation of another road point on the first road can be quickly and accurately determined. In this way, the absolute elevation of the first road is determined, and accuracy of the absolute elevation of the first road is ensured, improving a road rendering effect.

Herein the road points on the first road(s) are obtained from the two-dimensional map, and the absolute elevations of the respective projection points of the plurality of road points are extracted from the terrain data. That is, the absolute elevations are extracted from data reflecting the real topography and the like of the region, and hence the determined absolute elevations of the projection points are accurate. Relative elevations of the road points are then determined. In this determination, the relative elevation is solved through optimizing a function. Specifically, the set of constraint conditions on the elevations of the road points may be generated according to the determined positional relationship among the road points, and the set of constraint conditions indicates conditions that need to be met by the elevations of the road points. Here the elevation of each road point may be represented by the relative elevation of the road point relative to its projection point. The relative elevation is the unknown variable that needs to be calculated. Hence, the elevation function is constructed using the respective relative elevations of the road points as variables, and the elevation function is solved under the restriction of the set of constraint conditions to obtain the elative elevations of the road points. The absolute elevation of each road point is then obtained using the relative elevation of the road point and the absolute elevation of the projection point of the road point. These absolute elevations reflect the real height of the first road(s) more accurately. When the first road(s) are rendered using these absolute elevations, a better display effect can be achieved, and the vividness of the first roads is improved, which brings better immersion experience to users.

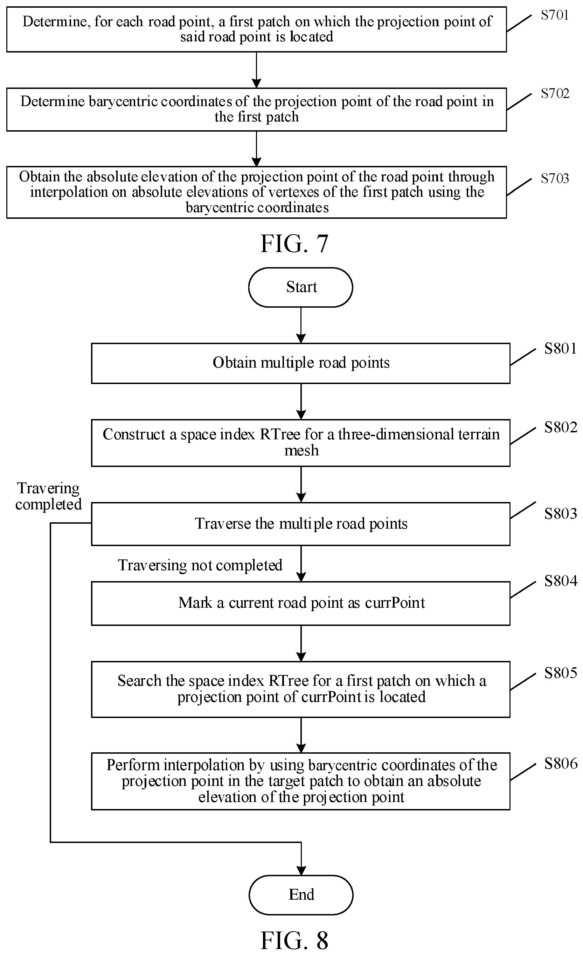

Hereinabove implementation of determining an absolute elevation of a road point has been described. The absolute elevation of the road point may be represented by a relative elevation of the road point with respect to its projection point and an absolute elevation of its projection point. The absolute elevation of the projection point plays a significant role in determining the absolute elevation of the road point. Hereinafter a manner of determining the absolute elevation of the projection point in S203 is illustrated in detail using an example in which the terrain data comprises a three-dimensional terrain mesh that comprises multiple patches. Reference is made to FIG. 7. The method includes the following operations.

S701: Determine, for each road point, a first patch on which the projection point of said road point is located.

After obtaining the multiple road points, the server may determine for each road point a patch on which the projection point of the road point is located, that is, obtain the first patch. The multiple road points may be stored in a control point list. The control point list is represented as controlPointList, the current road point under processing may be marked as currPoint, and the first patch on which the projection point of the road point is located may be marked as polygon.

There are various manners of determining the first patch. The absolute elevation of the road point is an unknown quantity, the two-dimensional position information of the road point is known, and two-dimensional position information of a vertex of each patch in the three-dimensional terrain mesh is also known. Hence, in all embodiments of the present disclosure, the server may determine, by comparing the two-dimensional position information of each road point with each patch in the mesh, whether the projection point of the road point is located in the patch. Thereby, the first patch can be obtained. The two-dimensional position information may be, for example, longitude-latitude coordinates, or planer coordinates (for example, X-Y coordinates).

Alternatively, a manner of determining the first patch may be as follows. A spatial index is established for the patches in the three-dimensional terrain mesh. Using the spatial index, the patches are searched for candidate patches. The first patch on which the projection point of said road point is located is determined from the candidate patches.

Using the spatial index, the candidate patches near the road point can be selected first, and then the above comparison only needs to be performed on the candidate patches separately to determine the candidate patch on which the projection point of the road point is located. There is no need to compare each patch in the three-dimensional terrain mesh with the position information of the road point, thereby reducing the calculation amount and improving efficiency of determining the first patch.

The form of the spatial index is not limited herein. In all embodiments of the present disclosure, the spatial index may be RTree. RTree is an efficient data structure, and thus the spatial data query can be efficiently performed. By using the RTree, a patch (that is, a candidate patch) near the road point can be efficiently found, that is, a patch on which the road point may be projected can be determined. Because the absolute elevation of the road point is unknown, querying the RTree is based on the two-dimensional position information of the current road point.

The manner of constructing the spatial index RTree may be as follows. A circumscribed rectangle of each patch is created using the two-dimensional position information (ignoring the elevation information) of each vertex of the patch. The spatial index RTree is constructed using the circumscribed rectangles of all the patches.

In all embodiment of the present disclosure, after the candidate patches are obtained, that is, after patches near the road point are found, the first patch on which the projection point of said road point is located needs to be determined, that is, the first patch is determined from the candidate patches.

The manner of determining the first patch from the candidate patches may be as follows. For each candidate patch, it is determined whether the projection point of the road point is enclosed by edges of the candidate patch (where the elevation information is ignored). The candidate patch having the projection point is determined to serve as the first patch. There are various ways of determining whether the projection point is enclosed by edges of the candidate patch. In all embodiments of the present disclosure, when the candidate patch is a triangular patch, the first patch may be determined from the candidate patches through any of the following three method: an interior-angle sum method, a same-direction method, or a center-of-gravity method.

The interior-angle sum method is illustrated as follows, where the elevation information is ignored. Projection point P of a road point is connected to three vertexes of the triangular patch to obtain three line segments. Assuming the three vertexes of the triangular patch are respectively A, B, and C, the three line segments obtained by connecting projection point P and the three vertexes of the triangular patch are respectively PA, PB, and PC. Respective angles between the three line segments and one edge of the triangular patch are obtained. If a sum of all angles for any edge is 180 degrees, the projection point P is located on the triangular patch (i.e., enclosed by the edges of the patch). Otherwise, the projection point P is not on the triangular patch.

The same-direction method is illustrated as follows, where the elevation information is ignored. It is assumed that a projection point of a road point is P, and three vertexes of the triangular patch are respectively A, B, and C. If the projection point P is located in the triangular patch, the following condition is met. When traversing the three edges in the direction of ABCA, the projection point P is always located on the right side of the traversing path comprising the three edges, i.e., AB, BC, and CA. When AB is traversed from A to B, point C is located on a right side of AB. Similarly, when BC is traversed from B to C, point A is located on a right side of BC. When CA is traversed from C to A, point B is located on a right side of CA. Therefore, for any edge connecting two vertices, it may be determined whether the projection point is on a left side or a right side of the edge according to whether the projection point P and the remaining vertex are located on different sides or the same side of the vertex. A manner of determining whether two points are on the same side of a line segment may be as follows. Using edge AB as an example, PA represents a vector from P to A, a cross product of vectors PA and AB is obtained, and a cross product of vectors CA and AB is obtained. If the directions of the two cross products are the same, the two points P and C are on the same side of AB. Whether directions of two vectors are the same may be implemented by using their dot product. If the dot product is greater than 0, an angle between the two vectors is an acute angle, otherwise, the angle between the two vectors is an obtuse angle.

In some cases, the projection point of the road point may be located within a patch or may be located on an edge or at a vertex of the three-dimensional terrain mesh, that is, on an edge or at a vertex of a patch. In the three-dimensional terrain mesh, one edge or vertex may be shared among multiple patches. In this case, a manner of determining the first patch on which the projection point of said road point is located may be as follows. When the projection point of the road point is located on an edge or at a vertex of the three-dimensional terrain mesh, a patch (any patch) having the edge or the vertex is determined to serve as the first patch.

S702: Determine barycentric coordinates of the projection point of said road point in the first patch.

After the first patch is determined, the barycentric coordinates of the projection point of the road point in the first patch may be calculated. In mathematics, the barycentric coordinates are coordinates defined with reference to vertexes of a simplex (such as a triangle or a tetrahedron), and the barycentric coordinates are a type of homogeneous coordinates. A calculation manner of the barycentric coordinates is not limited herein and may refer to related art.

When a patch is a triangular patch, the barycentric coordinates are also called area coordinates. It is assumed that vertexes of the triangular patch are A, B, and C. Barycentric coordinates of a projection point P with respect to the triangular patch ABC are proportional to (singed) areas of triangles PBC, PCA, and PAB. It is assumed that the ratio of the areas of the PBC, the PCA, and the PAB is $\lambda_1 : \lambda_2 : \lambda_3$, and $\lambda_1 + \lambda_2 + \lambda_3 = 1$. Coordinates of A, B, and C are known. The barycentric coordinates $(\lambda_1, \lambda_2, \lambda_3)$ of the projection point P in the triangular patch are calculated accordingly.

If the projection point is on an edge of the triangular patch, the barycentric coordinates have one zero component. If the projection point is at a vertex of the triangular patch, the barycentric coordinates have two zero components.

S703: Obtain the absolute elevation of the projection point of said road point through interpolation on absolute elevations of vertexes of the first patch using the barycentric coordinates.

In this embodiment of the present disclosure, interpolation may be linear interpolation. As an example, the patch is a triangular patch, barycentric coordinates of the projection point P in the triangular patch ABC are $(\lambda_1, \lambda_2, \lambda_3)$, and absolute elevations of three vertexes A, B, and C of the triangular patch are $h_1$, $h_2$, and $h_3$. An absolute elevation of the projection point P is obtained through interpolation on vertices of the triangular patch using the following equation.

$$h_p = \lambda_1 h_1 + \lambda_2 h_2 + \lambda_3 h_3 \qquad\qquad (6)$$

$h_p$ represents the absolute elevation of the projection point of the road point and may be denoted as currHeight. $h_1$, $h_2$, and $h_3$ are the absolute elevations of the three vertexes of the triangular patch. $\lambda_1$, $\lambda_2$, and $\lambda_3$ form the barycentric coordinates of the projection point P in the triangular patch.

When the terrain data is a three-dimensional terrain mesh including a triangular patch and a constructed spatial index is RTree, for a process of determining an absolute elevation of a projection point, reference may be made to FIG. 8. Multiple road points are obtained (refer to S801 in FIG. 8), and a spatial index RTree of a three-dimensional terrain mesh is constructed (refer to S802 in FIG. 8). The multiple road points are traversed (refer to S803 in FIG. 8), and when the traversing is not completed, a currently traversed road point is marked as currPoint (refer to S804 in FIG. 8). The spatial index RTree is searched for a first patch on which a projection point of the currPoint is located (refer to S805 in FIG. 8), and an absolute elevation of the projection point is obtained through interpolation using barycentric coordinates of the projection point in the first patch (refer to S806 in FIG. 8). In this way, an operation of extracting an absolute elevation from real terrain data is completed.

Because the terrain data accurately records absolute elevations of vertexes of patches, the first patch on which the projection point of the road point is located is determined, and interpolation calculation is performed based on the absolute elevations of the vertexes of the first patch according to the barycentric coordinates of the projection point in the first patch, to ensure that the calculated absolute elevation of the projection point is accurate.

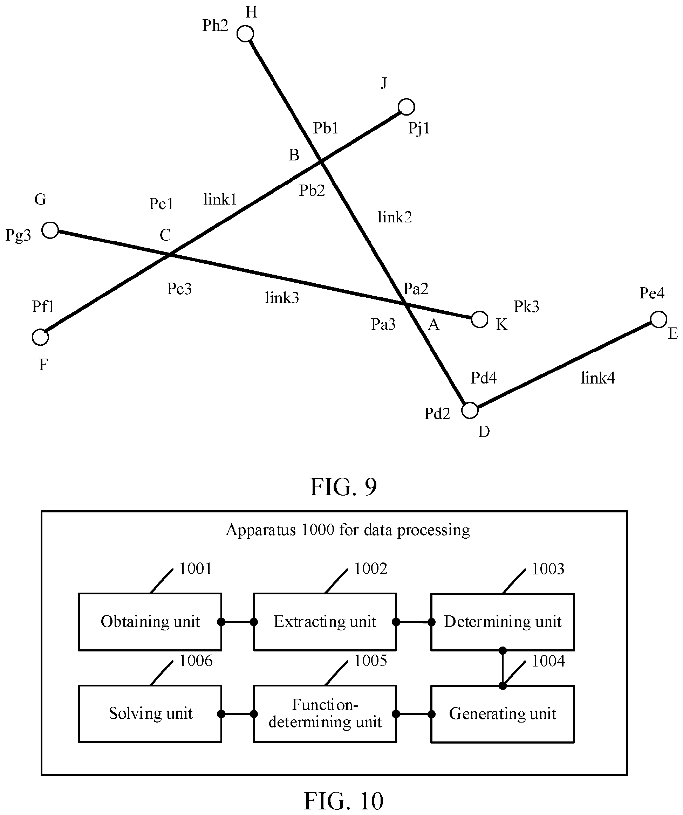

The method for data processing provided in the embodiments of the present disclosure are described below with reference to a practical application scenario. In the application scenario, as an example, the elevation refers to the absolute elevation, the first road includes link1, link2, link3, and link4, and a top view of link1, link2, link3, and link4 is shown in FIG. 9.

link1, link2, and link3 are overlaid at points A, B, and C (that is, they form grade-separated crossings), and link2 and link4 are connected at point D (that is, they form a road junction).

It is assumed that absolute elevations of projection points of points A, B, C, D, E, F, G, H, J, and K on the terrain data are respectively: $h_A^a$, $h_B^a$, $h_C^a$, $h_D^a$, $h_E^a$, $h_F^a$, $h_G^a$, $h_H^a$, $h_J^a$, and $h_K^a$. The absolute elevations may be calculated in the manner as described in S203 and are treated as known quantities.

It is assumed that link2 is higher than link3 at point A, link1 is higher than link2 at point B, and link1 is higher than link3 at point C, that is, the overlaying height constraint condition of the grade-separated crossings are as follows.

$$h_{a2} - h_{a3} \geq H$$

$$h_{b1} - h_{b2} \geq H$$

$$h_{c1} - h_{c3} \geq H$$

$h_{a2}$ is a relative elevation of road point $P_{a2}$ on link 2 with respect to its projection point at point A, and $h_{a3}$ is a relative elevation of road point $P_{a3}$ on link3 with respect to its projection point at point A. $h_{b1}$ is a relative elevation of road point $P_{b1}$ on link1 with respect to its projection point at point B, and $h_{b2}$ is a relative elevation of road point $P_{b2}$ on link2 with respect to its projection point at point B. $h_{c1}$ is a relative elevation of road point $P_{c1}$ on link1 with respect to its projection point at point C, and $h_{c3}$ is a relative elevation of road point $P_{c3}$ on link3 with respect to its projection point at the point C.

link2 and link4 are adjacent at point D, that is, the height continuity constraint condition is as follows.

$$h_{d2}=h_{d4}$$

$h_{d2}$ is a relative elevation of road point $P_{d2}$ on link2 with respect to its projection point at point D, and $h_{d4}$ is a relative elevation of road point $P_{d4}$ on link4 with respect to its projection point at point D.

link1 is divided by point B and point C into three segments, and end points of each segment needs to satisfy the road slope constraint condition as follows.

$$-S_{fc}D_{fc} \leq (h_F^a + h_{f1}) - (h_C^a + h_{c1}) \leq S_{fc}D_{fc}$$

$$-S_{cb}D_{cb} \leq (h_C^a + h_{c1}) - (h_B^a + h_{b1}) \leq S_{cb}D_{cb}$$

$$-S_{bj}D_{bj} \leq (h_B^a + h_{b1}) - (h_J^a + h_{j1}) \leq S_{bj}D_{bj}$$

$S_{fc}$, $S_{cb}$, and $S_{bj}$ are maximum slope tangents, and $D_{fc}$, $D_{cb}$, and $D_{bj}$ are distances between the point F and the point C, between the point C and the point B, and between the point B and the point J on the plane, respectively. After two-dimensional position information of the road points are acquired, the distances can be calculated and therefore are known quantities. $h_F^a$, $h_C^a$, $h_B^a$, and $h_J^a$ are absolute elevations of the projection points of F, C, B, and J, respective. $h_{f1}$ is a relative elevation of road point $P_{f1}$ on link1 with respect to its projection point at point F, $h_{c1}$ is a relative elevation of road point $P_{c1}$ on link1 with respect to the projection point at point C, $h_{b1}$ is a relative elevation of road point $P_{b1}$ on link1 with respect to the projection point at point B, and $h_{j1}$ is a relative elevation of road point $P_{j1}$ on link1 with respect to the projection point at point J.

Similarly, for link2, segments need to satisfy the road slope constraint condition as follows.

$$-S_{hb}D_{hb} \leq (h_H^a + h_{h2}) - (h_B^a + h_{b2}) \leq S_{hb}D_{hb}$$

$$-S_{ba}D_{ba} \leq (h_B^a + h_{b2}) - (h_A^a + h_{a2}) \leq S_{ba}D_{ba}$$

$$-S_{ad}D_{ad} \leq (h_A^a + h_{a2}) - (h_D^a + h_{d2}) \leq S_{ad}D_{ad}$$

$S_{hb}$, $S_{ba}$, and $S_{ad}$ are maximum slope tangents, and $D_{hb}$, $D_{ba}$, and $D_{ad}$ are distances between point H and point B, between point B and point A, and between the point A and the point D on the plane, respectively. After two-dimensional position information of the road points are known, the distances can be calculated and therefore are known quantities. $h_H^a$, $h_B^a$, $h_A^a$, and $h_D^a$ are the absolute elevations of the projection points of H, B, A, and D, respectively. $h_{h2}$ is a relative elevation of road point $P_{h2}$ on link2 with respect to the projection point at point H, $h_{b2}$ is a relative elevation of road point $P_{b2}$ on link2 with respect to the projection point at point B, $h_{a2}$ is a relative elevation of road point $P_{a2}$ on link2 with respect to the projection point at point A, and $h_{d2}$ is a relative elevation of road point $P_{d2}$ on link2 with respect to the projection point at point D.

For link3, segments need to satisfy the road slope constraint condition as follows.

$$-S_{gc}D_{gc} \leq \left(h_G^a + h_{g3}\right) - (h_C^a + h_{c3}) \leq S_{gc}D_{gc}$$

$$-S_{ca}D_{ca} \leq (h_C^a + h_{c3}) - (h_A^a + h_{a3}) \leq S_{ca}D_{ca}$$

$$-S_{ak}D_{ak} \leq (h_A^a + h_{a3}) - (h_K^a + h_{k3}) \leq S_{ak}D_{ak}$$

$S_{gc}$, $S_{ca}$, and $S_{ak}$ are maximum slope tangents, and $D_{gc}$, $D_{ca}$, and $D_{ak}$ are distances between point G and point C, between point C and point A, and between the point A and the point K on the plane, respectively. After two-dimensional position information of the road points are known, the distances can be calculated and therefore are known quantities.

$h_G^a$, $h_C^a$, $h_A^a$, and $h_K^a$ are the absolute elevations of the projection points of G, C, A, and K, respectively. $h_{g3}$ is a relative elevation of road point $P_{g3}$ on link3 with respect to the projection point at point G, $h_{c3}$ is a relative elevation of road point $P_{c3}$ on link3 with respect to the projection point at point C, $h_{a3}$ is a relative elevation of road point $P_{a3}$ on link3 with respect to the projection point at point A, and $h_{k3}$ is a relative elevation of road point $P_{k3}$ on link3 with respect to the projection point at point K.

For link4, the segment needs to satisfy the road slope constraint condition as follows.

$$-S_{de}D_{de} \leq (h_D^a + h_{d4}) - (h_E^a + h_{e4}) \leq S_{de}D_{de}$$

$S_{de}$ is a maximum slope tangent, and $D_{de}$ is a distance between point D and point E on the plane. After two-dimensional position information of the road points are known, the distances can be calculated and therefore are known quantities. $h_D^a$, and $h_E^a$ are y the absolute elevations of the projection points of D and E, respectively. $h_{d4}$ is a relative elevation of road point $P_{d4}$ on link4 with respect to the projection point at point D, and $h_{e4}$ is a relative elevation of road point $P_{e4}$ on link4 with respect to the projection point at point E.

The elevation function is as follows.

$$V = h_{f1}^2 + h_{c1}^2 + h_{b1}^2 + h_{j1}^2 + h_{h2}^2 + h_{b2}^2 + h_{a2}^2 + h_{d2}^2 + h_{g3}^2 + h_{c3}^2 + h_{a3}^2 + h_{k3}^2 + h_{d4}^2 + h_{e4}^2$$

V is an output of the elevation function, and $h_{f1}$, $h_{c1}$, $h_{b1}$, $h_{j1}$, $h_{h2}$, $h_{b2}$, $h_{a2}$, $h_{d2}$, $h_{g3}$, $h_{c3}$, $h_{a3}$, $h_{k3}$, $h_{d4}$, and $h_{e4}$ are relative elevations of the road points $P_{f1}$, $P_{c1}$, $P_{b1}$, $P_{j1}$, $P_{h2}$, $P_{b2}$, $P_{a2}$, $P_{d2}$, $P_{g3}$, $P_{c3}$, $P_{a3}$, $P_{k3}$, $P_{d4}$, and $P_{e4}$, respectively, with respect to corresponding projection points.

Therefore, generating the relative elevations of the road points with respect to their projection points is converted into solving the following optimization problem.

$$minV = min\left(h_{f1}^2 + h_{c1}^2 + h_{b1}^2 + h_{j1}^2 + h_{h2}^2 + h_{b2}^2 + h_{a2}^2 + h_{d2}^2 + h_{g3}^2 + h_{c3}^2 + h_{a3}^2 + h_{k3}^2 + h_{d4}^2 + h_{e4}^2\right)$$

$$h_{a2} - h_{a3} \geq H$$

$$h_{b1} - h_{b2} \geq H$$

$$h_{c1} - h_{a3} \geq H$$

$$-S_{fc}D_{fc} \leq (h_F^a + h_{f1}) - (h_C^a + h_{c1}) \leq S_{fc}D_{fc}$$

$$-S_{cb}D_{cb} \leq (h_C^a + h_{c1}) - (h_B^a + h_{b1}) \leq S_{cb}D_{cb}$$

$$-S_{bj}D_{bj} \leq (h_B^a + h_{b1}) - \left(h_J^a + h_{j1}\right) \leq S_{bj}D_{bj}$$

$$-S_{hb}D_{hb} \leq (h_H^a + h_{h2}) - (h_B^a + h_{b2}) \leq S_{hb}D_{hb}$$

$$-S_{ba}D_{ba} \leq (h_B^a + h_{b2}) - (h_A^a + h_{a2}) \leq S_{ba}D_{ba}$$

$$-S_{ad}D_{ad} \leq (h_A^a + h_{a2}) - (h_D^a + h_{d2}) \leq S_{ad}D_{ad}$$

$$-S_{gc}D_{gc} \leq \left(h_G^a + h_{g3}\right) - (h_C^a + h_{c3}) \leq S_{gc}D_{gc}$$

$$-S_{ca}D_{ca} \leq (h_C^a + h_{c3}) - (h_A^a + h_{a3}) \leq S_{ca}D_{ca}$$

$$-S_{ak}D_{ak} \leq (h_A^a + h_{a3}) - (h_K^a + h_{k3}) \leq S_{ak}D_{ak}$$

$$-S_{de}D_{de} \leq (h_D^a + h_{d4}) - (h_E^a + h_{e4}) \leq S_{de}D_{de}$$

$$h_{d2} = h_{d4}$$

Parameters in the equations refer to the foregoing equations, and details are not described again.

Currently, there are many mature mathematical tools that can be used for such mathematical optimization problem, for example, an interior-point method in convex optimization. Solving can be performed efficiently by using these mathematical tools.

After the relative elevations of all the road points with respect to the corresponding projection points are calculated, the absolute elevations of the corresponding projection points further need to be added. In other words, the absolute elevations of F, C, B, and J on link1 are as follows.

$$h_{f1}^a = h_F^a + h_{f1}$$

$$h_{c1}^a = h_C^a + h_{c1}$$

$$h_{b1}^a = h_B^a + h_{b1}$$

$$h_{j1}^a = h_J^a + h_{j1}$$

$h_{f1}^a$, $h_{c1}^a$, $h_{b1}^a$, and $h_{j1}^a$ are the absolute elevations at F, C, B, and J, respectively on link1. Other parameters have been introduced in the foregoing equations, and details are not described herein again.

The absolute elevations of H, B, A, and D on link2 are as follows.

$$h_{h2}^a = h_H^a + h_{h2}$$

$$h_{b2}^a = h_B^a + h_{b2}$$

$$h_{a2}^a = h_A^a + h_{a2}$$

$$h_{d2}^a = h_D^a + h_{d2}$$

$h_{h2}^a$, $h_{b2}^a$, $h_{a2}^a$ and $h_{d2}^a$ are absolute elevations at H, B, A, and D, respectively, on link2. Other parameters have been introduced in the foregoing equations, and details are not described herein again.

The absolute elevations of G, C, A, and K on link3 are as follows.

$$h_{g3}^a = h_G^a + h_{g3}$$

$$h_{c3}^a = h_C^a + h_{c3}$$

$$h_{a3}^a = h_A^a + h_{a3}$$

$$h_{k3}^a = h_K^a + h_{k3}$$

$h_{g3}^a$, $h_{c3}^a$, $h_{a3}^a$, and $h_{k3}^a$ are respectively absolute elevations at G, C, A, and K, respectively, on link3. Other parameters have been introduced in the foregoing equations, and details are not described herein again.

The absolute elevations of D and E on link4 are as follows.

$$h_{d4}^a = h_D^a + h_{d4}$$

$$h_{e4}^a = h_E^a + h_{e4}$$

$h_{d4}^a$ and $h_{e4}^a$ are respectively absolute elevations at D, E, respectively, on link4. Other parameters have been introduced in the foregoing equations, and details are not described herein again.

After the absolute elevations of the above road points are obtained, interpolation is performed to obtain heights of the remaining road points on the first road(s). For example, for link1, after the absolute elevations of point C and point F are calculated, linear interpolation is used to calculate absolute elevations of all road points between C and F. The same approach applies to other roads, and details are not described herein.

According to this embodiment of the present disclosure, the disclosed two types of low-cost data, namely, the real terrain data and the two-dimensional map, are integrated to construct an optimization calculation model. Hence, roads rendered with elevations follow a correct overlaying relationship, and have continuous and smooth transition. The effect of rendering is close to roads on a real terrain. Vividness of rendering road elevation is improved, and stronger immersion experience is provided to the users. In an entire calculating process, no additional prior knowledge is needed, no manual intervention is needed, and fully automatic and low-cost calculation can be performed.

In the present disclosure, based on the implementations provided in the foregoing aspects, further combinations may be performed to provide more implementations.

Based on the method for data processing provided in the embodiment corresponding to FIG. 2, an embodiment of the present disclosure further provides an apparatus for data processing 1000. Reference is made to FIG. 10. The apparatus for data processing 1000 comprises an obtaining unit 1001, an extracting unit 1002, a determining unit 1003, a generating unit 1004, a function-determining unit 1005, and a solving unit 1006.

The obtaining unit 1001 is configured for obtaining terrain data of a region, in which one or more first roads are located, and a two-dimensional map of the region.

The obtaining unit 1001 is further configured for obtaining, from the two-dimensional map, a plurality of road points located on the one or more first roads.

The extracting unit 1002 is configured for extracting, from the terrain data, an absolute elevation of a respective projection point of each road point.

The determining unit 1003 is configured for determining a positional relationship among the road points according to the two-dimensional map.

The generating unit 1004 is configured for generating a set of constraint conditions on respective elevations of the road points according to the positional relationship among the road points, where the elevation of each road point refers to a relative elevation of said road point with respect to the projection point of said road point.

The function-determining unit 1005 is configured for determining an elevation function using variables representing the relative elevations of the road points.

The solving unit 1006 is configured for obtaining the relative elevation of each road point through solving the elevation function under the set of constraint conditions.

The determining unit 1003 is further configured for determining an absolute elevation of each road point using the relative elevation of said road point and the absolute elevation of the projection point of said road point.

In all embodiments of the present disclosure, the terrain data may be a three-dimensional mesh representing terrain of the region and comprises a plurality of patches. The extracting unit 1002 is configured for, for each road point: determining a first patch on which the projection point of said road point is located; determining barycentric coordinates of the projection point of said road point in the first patch; and obtaining the absolute elevation of the projection point of said road point through interpolation on absolute elevations of vertexes of the first patch using the barycentric coordinates.

In all embodiments of the present disclosure, the extracting unit 1002 may be configured for: creating a spatial index for the plurality of patches in the three-dimensional terrain mesh; searching, using the spatial index, the plurality of patches for candidate patches; and determining, from the candidate patches, the first patch on which the projection point of said road point is located.

In all embodiments of the present disclosure, the extracting unit 1002 may be configured for: determining, when the projection point of said road point is located on an edge or at a vertex of the three-dimensional terrain mesh, a patch having the edge or the vertex to serve as the first patch.

In all embodiments of the present disclosure, the obtaining unit 1001 may be configured for, for each first road: obtaining a start point and an end point of said first road; when the two-dimensional map indicates that said first road and another first road form a grade-separated crossing, obtaining a crossing point from the two-dimensional map, where the crossing point is located on said first road in the two-dimensional map and represents the grade-separated crossing, and determining the crossing point, the start point, and the end point to serve as the plurality of road points on such first road; and when the two-dimensional map indicates that said first road does not form a grade-separated crossing with any other first road, determining the start point and the end point to serve as the plurality of road points on such first road.

In all embodiments of the present disclosure, the determining unit 1003 may be configured for: determining first adjacency indicating all pairs of adjacent road points, that are located on the same first road, among the plurality of road points; determining, from the two-dimensional map, a positional relationship among the first roads; and determining the positional relationship among the road points according to the positional relationship among the first roads and the first adjacency.

In all embodiments of the present disclosure, the determining unit 1003 may be configured for, when the positional relationship among the first roads indicates that at least two first roads form a grade-separated crossing: obtaining, from the two-dimensional map, a respective first road point that represents the grade-separated crossing and is located on each of the at least two first roads; determining a height order of the respective first road points of the at least two first roads; and determining that the positional relationship among the road points comprises the height order associating the respective first road points and the first adjacency separately associating the road points in each pair of adjacent road points.

In all embodiments of the present disclosure, the determining unit 1003 may be configured for, when the positional relationship among the first roads indicates that at least two first roads are connected to each other at a road junction: obtaining, from the two-dimensional map, a respective second road point that represents the road junction and located on each of the at least two first roads; and determining second adjacency indicating that the respective second road points of the at least two first roads are adjacent to each other; and determining that the positional relationship among the road points comprises the first adjacency separately associating the road points in each pair of adjacent road points and the second adjacency associating the respective second road points.

In all embodiments of the present disclosure, the generating unit 1004 may be configured for: obtaining third road points, among the plurality of road points, that are associated in the positional relationship; generating a first constraint condition on elevations of the third road points according to a manner of association among the third road points; and determining that the set of constraint conditions comprises the first constraint condition.

In all embodiments of the present disclosure, the generating unit 1004 may be configured for: when all the third road points represent a same grade-separated crossing formed by at least two first roads and each third road point is located on a respective one of the at least two first roads in the two-dimensional map, generating the first constraint condition using the height order and a threshold of height difference; when the third road points are a pair of adjacent road points located on the same first road in the two-dimensional map, generating the first constraint condition using a position of each third road point in the two-dimensional map and a threshold of road slope; and/or when all the third road points represent a same road junction formed by at least two first roads and each third road point is located on a respective one of the at least two first roads in the two-dimensional map, generating the first constraint condition indicating that the third road points have identical elevations.

In all embodiments of the present disclosure, the solving unit 1006 may be configured for: obtaining a respective initial relative elevation of each road point; calculating an elevation metric through substituting the initial relative elevations of the road points into the elevation function; and adjusting values of the initial relative elevations of the road points under the set of constraint conditions, until the elevation metric meets a preset condition, to obtain the relative elevations of the road points.

In all embodiments of the present disclosure, the plurality of road points may be a part of all road points located on the one or more first roads, and the determining unit 1003 is further configured for: obtaining, from the two-dimensional map, a road point that is located on a first road among the one or more first road to serve as an intermediate road point, where the intermediate road point does not belong to the plurality of road points; obtaining, from the plurality of road points, road points that are on the first road and adjacent to the intermediate road point to serve as reference road points; determining an absolute elevation of the intermediate road point through interpolation on absolute elevations of the reference road points; and determining an absolute elevation of the first road to be a set of elevations comprising the absolute elevations of road points, which are among the plurality of road points and located on the first road, and the absolute elevation of the intermediate road point.

In all embodiments of the present disclosure, the respective elevation of each road points may refer to the absolution elevation of said road point, and the absolute elevation of each road point is represented by the relative elevation of said road point with respect to the projection point of said road point and the absolute elevation of the projection point of said road point.

Herein the road points on the first road(s) are obtained from the two-dimensional map, and the absolute elevations of the respective projection points of the plurality of road points are extracted from the terrain data. That is, the absolute elevations are extracted from data reflecting the real topography and the like of the region, and hence the determined absolute elevations of the projection points are accurate. Relative elevations of the road points are then determined. In this determination, the relative elevation is solved through optimizing a function. Specifically, the set of constraint conditions on the elevations of the road points may be generated according to the determined positional relationship among the road points, and the set of constraint conditions indicates conditions that need to be met by the elevations of the road points. Here the elevation of each road point may be represented by the relative elevation of the road point relative to its projection point. The relative elevation is the unknown variable that needs to be calculated. Hence, the elevation function is determined using the respective relative elevations of the road points as variables, and the elevation function is solved under the restriction of the set of constraint conditions to obtain the elative elevations of the road points. The absolute elevation of each road point is then obtained using the relative elevation of the road point and the absolute elevation of the projection point of the road point. These absolute elevations reflect the real height of the first road(s) more accurately. When the first road(s) are rendered using these absolute elevations, a better display effect can be achieved, and the vividness of the first roads is improved, which brings better immersion experience to users.

An embodiment of the present disclosure further provides a computer device. The computer device may perform the method for data processing. The computer device may be a terminal. An example in which the terminal is a smartphone is used.

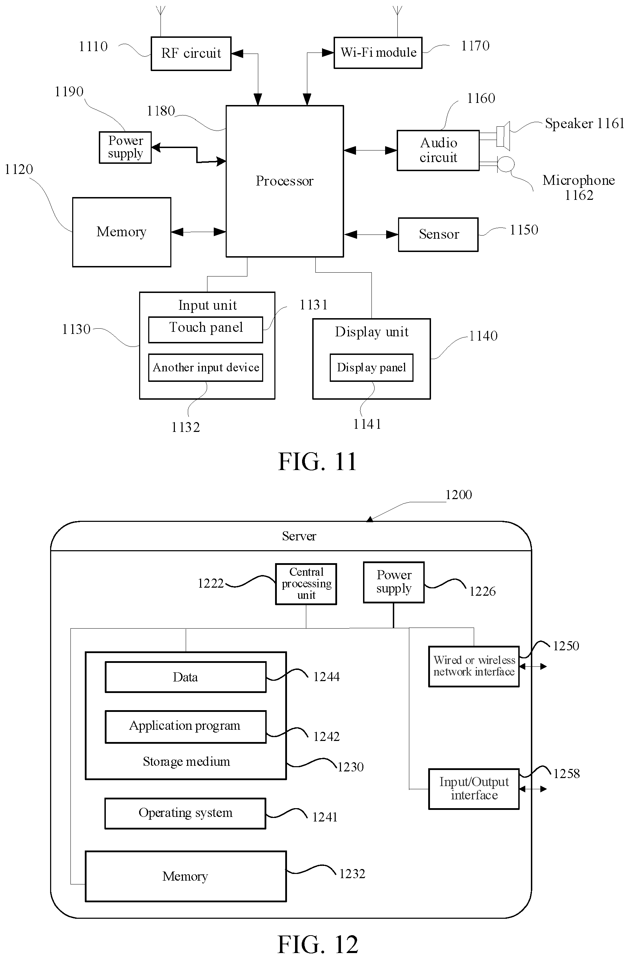

FIG. 11 is a block diagram of a partial structure of a smartphone according to an embodiment of the present disclosure. Refer to FIG. 11. The smartphone includes components such as a radio frequency (RF) circuit 1110, a memory 1120, an input unit 1130, a display unit 1140, a sensor 1150, an audio circuit 1160, a wireless fidelity (Wi-Fi) module 1170, a processor 1180, and a power supply 1190. The input unit 1130 may include a touch panel 1131 and another input device 1132. The display unit 1140 may include a display panel 1141. The audio circuit 1160 may include a speaker 1161 and a microphone 1162. The structure of the smartphone shown in FIG. 11 does not constitute a limitation to the smartphone. The smartphone may include more or fewer components than those shown, or some components may be combined, or different component arrangements may be used.

The memory 1120 may be configured for store a software program and a module, and the processor 1180 executes various function applications of the smartphone and performs data processing by running the software program and the module stored in the memory 1120. The memory 1120 may mainly include a program storage area and a data storage area. The program storage area may store an operating system, an application program required by at least one function (such as a sound playback function and an image display function), and the like. The data storage area may store data (such as audio data and a phone book) created according to the use of the mobile phone, and the like. In addition, the memory 1120 may include a high-speed random-access memory, and may also include a non-volatile memory, for example, at least one magnetic disk storage device, a flash memory, or another volatile solid-state memory.

The processor 1180 is a control center of the smartphone and is connected to various parts of the entire smartphone by using various interfaces and lines. By running or executing the software program and/or the module stored in the memory 1120, and invoking data stored in the memory 1120, the processor executes various functions of the smartphone and processes the data. In some embodiments, the processor 1180 may include one or more processing units. Preferably, an application processor and a modem processor may be integrated into the processor 1180. The application processor mainly processes an operating system, a user interface, an application program, and the like. The modem processor mainly processes wireless communication. The modem processor may alternatively not be integrated into the processor 1180.

In this embodiment, the processor 1180 in the smartphone may perform the method for data processing provided in the embodiments of the present disclosure.

The computer device provided in this embodiment of the present disclosure may alternatively be a server. Refer to FIG. 12. FIG. 12 is a structural diagram of a server 1200 according to an embodiment of the present disclosure. The server 1200 may vary greatly due to different configurations or performance, and may include one or more processors, for example, central processing units (CPU) 1222, a memory 1232, and one or more storage media 1230 (for example, one or more mass storage devices) that store application programs 1242 or data 1244. The memory 1232 and the storage medium 1230 may be configured for transient storage or permanent storage. The program stored in the storage medium 1230 may include one or more modules (not marked in the figure), and each module may include a series of instruction operations to the server. Further, the central processing unit 1222 may be configured for communication with the storage medium 1230, and perform, on the server 1200, a series of instruction operations in the storage medium 1230.

The server 1200 may include one or more power supplies 1226, one or more wired or wireless network interfaces 1250, one or more input/output interfaces 1258, and/or one or more operating systems 1241, such as Windows Server™, Mac OS X™, Unix™, Linux™, and FreeBSD™.

In this embodiment, the central processing unit 1222 in the server 1200 may perform the method for data processing provided in the embodiments of the present disclosure.

According to an aspect of the present disclosure, a computer-readable storage medium is provided. The computer-readable storage medium is configured for storing a computer program. The computer program is configured for performing the method for data processing described in the foregoing embodiments.

According to an aspect of the present disclosure, a computer program product is provided. The computer program product includes a computer program, and the computer program is stored in a computer-readable storage medium. A processor of a computer device reads the computer program from the computer-readable storage medium, and the processor executes the computer program, to cause the computer device to perform the method provided in various exemplary implementations of the foregoing embodiments.

The descriptions of procedures or structures corresponding to the foregoing drawings have different emphases, and parts not described in detail in a process or structure may refer to the related descriptions of other procedures or structures.

The terms "first", "second", "third", "fourth", and the like (if any) in the specification of the present disclosure and the foregoing accompanying drawings are configured for distinguishing similar objects and are not necessarily configured for describing a particular order or sequence. Data used in this way is interchangeable in a suitable case, so that the embodiments of the present disclosure described herein can, for example, be implemented in an order other than those illustrated or described herein. In addition, the terms "comprise", "include", "have", and any variants thereof are intended to cover the non-exclusive inclusion. For example, a process, method, system, product, or device that includes a series of steps or units is not necessarily limited to those steps or units expressly listed but can include other steps or units not expressly listed or inherent to such a process, method, product, or device.

In several embodiments provided in the present disclosure, the system, apparatus, and method disclosed may be implemented in other manners. For example, the described apparatus embodiments are only exemplary. For example, the division of the units is only a logical function division and may be other divisions during actual implementation. For example, multiple units or components may be combined or integrated into another system, or some features may be ignored or not performed. In addition, mutual coupling or direct coupling, or communication connection displayed or discussed may be implemented through some interfaces. Indirect coupling or communication connection between the apparatuses or units may be electronic, mechanical, or the like.

The units described as separate components may or may not be physically separate, and components displayed as units may or may not be physical units, may be located in one place, or may be distributed on multiple network units. Some or all of the units may be selected according to actual needs to achieve the objectives of the solution in the embodiments.

In addition, function units in the embodiments of the present disclosure may be integrated into one processing unit, the units may be physically separated, or two or more units may be integrated into one unit. The above integrated unit may be implemented in the form of hardware or a software function unit.

If the integrated unit is implemented in the form of the software function unit and is sold or used as an independent product, the integrated unit may be stored in a computer-readable storage medium. Based on such an understanding, the technical solutions of the present disclosure essentially, or the part contributing to the related art, or all or a part of the technical solutions may be implemented in the form of a software product. The computer software product is stored in a storage medium and includes several instructions for instructing a computer device (which may be a terminal, a server, a network device, or the like) to perform all or some of the steps of the method described in the embodiments of the present disclosure. The foregoing storage medium includes various media that can store computer programs, such as a USB flash drive, a mobile hard disk, a read-only memory (ROM), a random-access memory (RAM), a magnetic disk, or a compact disc.

The foregoing embodiments are merely intended for describing the technical solutions of the present disclosure, but not for limiting the present disclosure. A person of ordinary skill in the art needs to understand that although the present disclosure has been described in detail with reference to the foregoing embodiments, modifications may be made to the technical solutions described in the foregoing embodiments, or equivalent replacements may be made to some technical features in the technical solutions.

**Claims**

1. A method for data processing, executable by a computer device, the method comprising:

obtaining terrain data of a region, in which one or more first roads are located, and a two-dimensional map of the region;
obtaining, from the two-dimensional map, a plurality of road points located on the one or more first roads;
extracting, from the terrain data, an absolute elevation of a respective projection point of each road point;
determining a positional relationship among the road points according to the two-dimensional map;
generating a set of constraint conditions on respective elevations of the road points according to the positional relationship among the road points, wherein the elevation of each road point refers to a relative elevation of said road point with respect to the projection point of said road point;
determining an elevation function using variables representing the relative elevations of the road points;
obtaining the relative elevation of each road point through solving the elevation function under the set of constraint conditions; and
determining an absolute elevation of each road point using the relative elevation of said road point and the absolute elevation of the projection point of said road point.

2. The method according to claim 1, wherein:

the terrain data is a three-dimensional mesh representing terrain of the region and comprises a plurality of patches, the projection point of each road point is located on the plurality of patches, and
extracting, from the terrain data, the absolute elevation of the respective projection point of each road point comprises, for each road point:

determining a first patch on which the projection point of said road point is located;
determining barycentric coordinates of the projection point of said road point in the first patch; and
obtaining the absolute elevation of the projection point of said road point through interpolation on absolute elevations of vertexes of the first patch using the barycentric coordinates.

3. The method according to claim 2, wherein determining the first patch on which the projection point of said road point is located comprises:

creating a spatial index for the plurality of patches in the three-dimensional terrain mesh;
searching, using the spatial index, the plurality of patches for candidate patches; and
determining, from the candidate patches, the first patch on which the projection point of said road point is located.

4. The method according to claim 2 or 3, wherein determining the first patch on which the projection point of said road point is located comprises:
determining, when the projection point of said road point is located on an edge or at a vertex of the three-dimensional terrain mesh, a patch having the edge or the vertex to serve as the first patch.

5. The method according to any one of claims 1 to 4, wherein obtaining, from the two-dimensional map, the plurality of road points located on the first road comprises, for each first road:

obtaining a start point and an end point of said first road;
when the two-dimensional map indicates that said first road and another first road form a grade-separated crossing,

obtaining a crossing point from the two-dimensional map, wherein the crossing point is located on said first road in the two-dimensional map and represents the grade-separated crossing; and
determining the crossing point, the start point, and the end point to serve as the plurality of road points on said first road; and

when the two-dimensional map indicates that said first road does not form a grade-separated crossing with any other first road,
determining the start point and the end point to serve as the plurality of road points on said first road.

6. The method according to any one of claims 1 to 5, wherein determining the positional relationship among the road points according to the two-dimensional map comprises:

   determining first adjacency indicating all pairs of adjacent road points, that are located on the same first road, among the plurality of road points;
   determining, from the two-dimensional map, a positional relationship among the first roads; and
   determining the positional relationship among the road points according to the positional relationship among the first roads and the first adjacency.

7. The method according to claim 6, wherein determining the positional relationship among the road points according to the positional relationship among the first roads and the first adjacency comprises:
   when the positional relationship among the first roads indicates that at least two first roads form a grade-separated crossing,

   obtaining, from the two-dimensional map, a respective first road point that represents the grade-separated crossing and is located on each of the at least two first roads;
   determining a height order of the respective first road points of the at least two first roads; and
   determining that the positional relationship among the road points comprises the height order associating the respective first road points and the first adjacency separately associating the road points in each pair of adjacent road points.

8. The method according to claim 6 or 7, wherein determining the positional relationship among the road points according to the positional relationship among the first roads and the first adjacency comprises:
   when the positional relationship among the first roads indicates that at least two first roads are connected to each other at a road junction,

   obtaining, from the two-dimensional map, a respective second road point that represents the road junction and located on each of the at least two first roads; and
   determining second adjacency indicating that the respective second road points of the at least two first roads are adjacent to each other; and
   determining that the positional relationship among the road points comprises the first adjacency separately associating the road points in each pair of adjacent road points and the second adjacency associating the respective second road points.

9. The method according to any one of claims 1 to 8, wherein generating the set of constraint conditions on respective elevations of the road points according to the positional relationship among the road points comprises:

   obtaining third road points, among the plurality of road points, that are associated in the positional relationship;
   generating a first constraint condition on elevations of the third road points according to a manner of association among the third road points; and
   determining that the set of constraint conditions comprises the first constraint condition.

10. The method according to claim 9, wherein generating a first constraint condition on elevations of the third road points according to a manner of association among the third road points comprises:

    when all the third road points represent a same grade-separated crossing formed by at least two first roads and each third road point is located on a respective one of the at least two first roads in the two-dimensional map, generating the first constraint condition using the height order and a threshold of height difference;
    when the third road points are a pair of adjacent road points located on the same first road in the two-dimensional map, generating the first constraint condition using a position of each third road point in the two-dimensional map and a threshold of road slope; and/or
    when all the third road points represent a same road junction formed by at least two first roads and each third road point is located on a respective one of the at least two first roads in the two-dimensional map, generating the first constraint condition indicating that the third road points have identical elevations.

11. The method according to any one of claims 1 to 10, wherein obtaining the relative elevation of each road point through solving the elevation function under the set of constraint conditions comprises:

obtaining a respective initial relative elevation of each road point;
calculating an elevation metric through substituting the initial relative elevations of the road points into the elevation function; and
adjusting values of the initial relative elevations of the road points under the set of constraint conditions, until the elevation metric meets a preset condition, to obtain the relative elevations of the road points.

12. The method according to any one of claims 1 to 11, wherein the plurality of road points is a part of all road points located on the one or more first roads, and the method further comprises:

obtaining, from the two-dimensional map, a road point that is located on a first road among the one or more first road to serve as an intermediate road point, wherein the intermediate road point does not belong to the plurality of road points;
obtaining, from the plurality of road points, road points that are on the first road and adjacent to the intermediate road point to serve as reference road points;
determining an absolute elevation of the intermediate road point through interpolation on absolute elevations of the reference road points; and
determining an absolute elevation of the first road to be a set of elevations comprising the absolute elevations of road points, which are among the plurality of road points and located on the first road, and the absolute elevation of the intermediate road point.

13. The method according to any one of claims 1 to 12, wherein the respective elevation of each road points refers to the absolution elevation of said road point, and the absolute elevation of each road point is represented by the relative elevation of said road point with respect to the projection point of said road point and the absolute elevation of the projection point of said road point.

14. An apparatus for data processing, comprising an obtaining unit, an extracting unit, a determining unit, a function-determining unit, and a solving unit, wherein:

the obtaining unit is configured for obtaining terrain data of a region, in which one or more first roads are located, and a two-dimensional map of the region;
the obtaining unit is configured for obtaining, from the two-dimensional map, a plurality of road points located on the one or more first roads;
the obtaining unit is configured for extracting, from the terrain data, an absolute elevation of a respective projection point of each road point;
the determining unit is configured for determining a positional relationship among the road points according to the two-dimensional map;
the generating unit is configured for generating a set of constraint conditions on respective elevations of the road points according to the positional relationship among the road points, wherein the elevation of each road point refers to a relative elevation of said road point with respect to the projection point of said road point;
the function-determining unit is configured for determining an elevation function using variables representing the relative elevations of the road points;
the solving unit is configured for obtaining the relative elevation of each road point through solving the elevation function under the set of constraint conditions; and
the determining unit is configured for determining an absolute elevation of each road point using the relative elevation of said road point and the absolute elevation of the projection point of said road point.

15. A computer device, comprising a processor and a memory, wherein:

the memory stores a computer program and is configured for transmitting the computer program to the processor; and
the processor is configured for executing the method according to any one of claims 1 to 13 according to instructions in the computer program.

16. A computer-readable storage medium, storing a computer program, wherein the computer program when executed by a processor causes the processor to perform the method according to any one of claims 1 to 13.

**17.** A computer program product, comprising a computer program, wherein the computer program when executed by a processor causes the processor to perform the method according to any one of claims 1 to 13.

Two-dimensional map

Road point → Terrain data → Extract → Absolute elevations of projection points

Positionnal relationship

Relative elevations as variables

Set of constrains

Elevation function

Calculating relative elevations

Relative elevations of road points

Absolute elevations of road points

100

FIG. 1

Obtain terrain data of a region, in which one or more first roads are located, and a two-dimensional map of the region — S201

Obtain, from the two-dimensional map, multiple road points located on the one or more first roads — S202

Extract, from the terrain data, an absolute elevation of a respective projection point of each road point — S203

Determine a positional relationship among the road points according to the two-dimensional map, and generate a set of constraint conditions on respective elevations of the road points according to the positional relationship among the road points — S204

Determine an elevation function using variables representing the relative elevations of the road points, and obtain the relative elevation of each road point through solving the elevation function under the set of constraint conditions — S205

Determine an absolute elevation of each road point using the relative elevation of said road point and the absolute elevation of the projection point of said road point — S206

FIG. 2

FIG. 3

link1

$P_{l1}$

$P_{m1}$
M
$P_{m2}$

$P_{q2}$

$P_{n1}$

link2

$P_{r2}$

FIG. 4

link1

$P_{l1}$

$P_{n1}$

FIG. 5

link1

$P_{l1}$

$P_{q2}$
link2

$P_{n1}$
O

$P_{r2}$

FIG. 6

| Determine, for each road point, a first patch on which the projection point of said road point is located | S701 |

| Determine barycentric coordinates of the projection point of the road point in the first patch | S702 |

| Obtain the absolute elevation of the projection point of the road point through interpolation on absolute elevations of vertexes of the first patch using the barycentric coordinates | S703 |

FIG. 7

Start

| Obtain multiple road points | S801 |

| Construct a space index RTree for a three-dimensional terrain mesh | S802 |

Travering completed

| Traverse the multiple road points | S803 |

Traversing not completed

| Mark a current road point as currPoint | S804 |

| Search the space index RTree for a first patch on which a projection point of currPoint is located | S805 |

| Perform interpolation by using barycentric coordinates of the projection point in the target patch to obtain an absolute elevation of the projection point | S806 |

End

FIG. 8

FIG. 9

FIG. 10

FIG. 11

FIG. 12

## INTERNATIONAL SEARCH REPORT

| International application No. |
| --- |
| **PCT/CN2024/111613** |

**A.    CLASSIFICATION OF SUBJECT MATTER**

G06T17/05(2011.01)i;  G06T15/00(2011.01)i

According to International Patent Classification (IPC) or to both national classification and IPC

**B.    FIELDS SEARCHED**

Minimum documentation searched (classification system followed by classification symbols)

IPC：G06T

Documentation searched other than minimum documentation to the extent that such documents are included in the fields searched

Electronic data base consulted during the international search (name of data base and, where practicable, search terms used)

VEN, CNABS, CNTXT, WOTXT, USTXT, EPTXT, IEEE, CNKI: 道路, 地图, 地形, 位置, 高程, 投影点, 相对高程, 绝对高程, 约束条件, 插值, 空间索引, 函数, 求解, 参考位置, road, map, topography, location, projection point, elevation, relative elevation, absolute elevation, constraint, interpolation, spatial index, function, solution, reference location

**C.    DOCUMENTS CONSIDERED TO BE RELEVANT**

| Category* | Citation of document, with indication, where appropriate, of the relevant passages | Relevant to claim No. |
| --- | --- | --- |
| PX | CN 117237560 A (TENCENT TECHNOLOGY (SHENZHEN) CO., LTD.) 15 December 2023 (2023-12-15)<br>claims 1-16, and description, paragraphs [0005]-[0010] | 1-17 |
| A | CN 116977575 A (TENCENT TECHNOLOGY (SHENZHEN) CO., LTD.) 31 October 2023 (2023-10-31)<br>description, paragraphs [0007]-[0200] | 1-17 |
| A | CN 116310019 A (ALIBABA (CHINA) CO., LTD.) 23 June 2023 (2023-06-23)<br>entire document | 1-17 |
| A | CN 116663219 A (TENCENT TECHNOLOGY (SHENZHEN) CO., LTD.) 29 August 2023 (2023-08-29)<br>entire document | 1-17 |
| A | CN 116977574 A (TENCENT TECHNOLOGY (SHENZHEN) CO., LTD.) 31 October 2023 (2023-10-31)<br>entire document | 1-17 |

☑ Further documents are listed in the continuation of Box C.　　☑ See patent family annex.

| | |
| --- | --- |
| *    Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
| --- | --- |
| **19 September 2024** | **24 September 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2024/111613**

**C.    DOCUMENTS CONSIDERED TO BE RELEVANT**

| Category* | Citation of document, with indication, where appropriate, of the relevant passages | Relevant to claim No. |
|---|---|---|
| A | US 2013328863 A1 (APPLE INC.) 12 December 2013 (2013-12-12)<br>entire document | 1-17 |
| A | US 2023128282 A1 (BEIJING BAIDU NETCOM SCIENCE & TECHNOLOGY CO., LTD.)<br>27 April 2023 (2023-04-27)<br>entire document | 1-17 |

Form PCT/ISA/210 (second sheet) (July 2022)

**INTERNATIONAL SEARCH REPORT**
Information on patent family members

International application No.

**PCT/CN2024/111613**

| Patent document cited in search report | | | Publication date (day/month/year) | Patent family member(s) | | | Publication date (day/month/year) |
|---|---|---|---|---|---|---|---|
| CN | 117237560 | A | 15 December 2023 | None | | | |
| CN | 116977575 | A | 31 October 2023 | None | | | |
| CN | 116310019 | A | 23 June 2023 | None | | | |
| CN | 116663219 | A | 29 August 2023 | None | | | |
| CN | 116977574 | A | 31 October 2023 | None | | | |
| US | 2013328863 | A1 | 12 December 2013 | US | 9208601 | B2 | 08 December 2015 |
| US | 2023128282 | A1 | 27 April 2023 | CN | 114445312 | A | 06 May 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2023114956927